# EUROPEAN PATENT SPECIFICATION

(11) **EP 1 552 143 B1**
(45) Date of publication and mention of the grant of the patent: **18.04.2007**
(21) Application number: 03751125.0
(22) Date of filing: 16.10.2003
(51) Int. Cl.: F03D 11/00

(54) **ANTI-ICING SYSTEM FOR WIND TURBINES**
ENTEISUNGSSYSTEM FÜR WINDKRAFTANLAGEN
SYSTEME ANTI-GIVRAGE DE TURBINES EOLIENNES

(30) Priority: 17.10.2002 IT TO20020908
(43) Date of publication of application: 13.07.2005
(73) Proprietor: Battisti, Lorenzo, I-38100 Trento (IT)
(72) Inventor: Battisti, Lorenzo, I-38100 Trento (IT)
(74) Representative: Dini, Roberto
(86) International application number: PCT/IB2003/004551
(87) International publication number: WO 2004/036038

(56) References cited:
- EP-A- 0 436 243
- EP-A- 0 475 658
- DE-A- 10 000 370
- DE-A- 19 802 574
- DE-C- 842 330
- US-A- 4 581 887
- US-A- 6 145 787
- OLIVER A.G. ET.AL: "Wind turbine blades equipped with air-jet vortex generators:Full scale verification of blade optimised for increased performance" EUROPEAN WIND ENERGY CONFERENCE;DUBLIN CASTLE, IRELAND, October 1997 (1997-10),

## Description

A Wind Energy Converting Systems (WECS) comprising a de-icing and anti-icing arrangement and a method for preventing and avoiding the ice accretion on the rotor blades of wind turbines in a Wind Energy Converting Systems (WECS) are the subject matter of the present invention. More particularly, a system for preventing and/or eliminating the ice accretion growing on the rotor blades of a WECS when the system operates in determined climatic and environmental conditions is proposed.

The ice accretion on a wing profile, and more specifically on the wind turbine rotor blade, seriously affects the fluid-dynamic characteristics of said components. In particular, the lift and the drag concerning both the single profile and the blade as a whole with its three-dimensional development, and Therefore the pressure distribution along the relevant surfaces, are remarkably changed. Often it is very difficult to leadingsee how such factors will change depending on the deposit of ice on the surfaces. As a consequence, the blade in operation undergoes different flexion and torsion stresses with respect to the design conditions, besides a remarkable worsening of the general aerodynamic efficiency of the wind turbine.

Summing up, the power generated by the WECS rotor when ice is present on the rotor blades is much less than that generated without icing. To this we have to add the remarkable problem that the blade, due to the increased and different masses distribution caused by the ice, which is present along the relevant surfaces, has a completely modified static and dynamic behavior with respect to the design conditions.

Moreover, in such operating conditions, a not negligible problem exists relating to the WECS safety, both in terms of safety concerning people or things which are near to the system, and of the possibility that the system itself fails and breaks down. In fact, if the blades work with ice on their surfaces, it may happen, in a fully unleadingseen manner, that ice pieces come off from the blades.

This event causes the following facts:
1) objects or people around the system are hit by such ice pieces;
2) suddenly and hardly leadingseeable structural stresses are generated, essentially of an aeroelastic nature, if the wind turbine rotor is in operation.

Due to the important sizes pertaining to last generation WECS, whereof rotors may have ninety meters in diameter and the towers may reach one hundred meters in height, once the conditions are created for the ice to come off, sudden and unleadingseeably important ice masses may take off as bullets from the blades, causing remarkable damages to the surrounding environment. The relevant consequences from such an event being not at all unlikely, of a legal type too, can be easily known by intuition.

As point 2) is concerned, this is not at all a minor problem. When the WECS is in operation, the structural vibrations of aeroelastic nature may generate remarkable structural stresses both on the single blades and on the system as a whole. Phenomena of structural resonance may take place with failures of the blade (i case of a not easily leadingseeable "flutter" phenomena as the pressure distribution on the blade surface may be very different from the designed one) as well as of the system as a whole (the bridges breaks down at the beginning of the twentieth century due to wind gusts are well known from the literature).

The mentioned reasons cause the stop of the WECS as the ice presence on the blades is detected. Such stops may have a more or less long duration depending on the seriousness of the problem. In fact, if the ice cannot be adequately removed by means of the available de-icing devices, the consequence is that the systems can be exploited only during a limited number of days per year, whether installed in particularly critical areas where the ice formation is concerned. Existing estimations indicate an electric power loss of about the 20-50% of a normal year production with continuous system working.

Today several solutions for trying to solve the onerous problem of the ice formation on the WECS blades are known. The systems applied to this field substantially follow three operation principles:
I) utilizing heat absorbing blade surface lining from the thermal sun radiation;
II) localized heating of the blade surfaces concerned by the ice formation;
III) heated air circulation inside the blade body, in order to transmit heat to the blade outside surface concerned by the ice accretion by means of internal thermal conduction.

It is evident that the systems of the first type have some effectiveness only in presence of sun, and Therefore only during the day and with climatic conditions of good sun radiation. But because is in the night that the most critical operating conditions are reached for the ice accretion, such systems are deficient in the very moment when they are needed.

The systems at point II) use generically sheets of an electrically resistive or thermo-conducting material, embedded inside the blade surface and heated for Joule effect. Such sheets are electrically heated and during the construction represent additional and electrically conductive masses applied to the shallow layers of the blade, specifically in the icing prone areas.

The said types of systems look apt to the purpose, namely they are valid both for preventing the ice accretion during the WECS operation and for eliminating the ice formed on the blades, for instance during a system stop. However they show such drawbacks that up to now these types of solution have been only used in very few systems, nearly all to study purpose.

In fact, in order to operate efficiently, the de-icing and anti-icing arrangements of the type II) need first of all a rather complicated ice accretion control and management mechanism. These mechanisms use ice locating sensors, a control and management processing software apt to control the electric power supply to the area where there is the danger or the ice accretion. The complexity, the cost, the reliability and maintenance problems of the WECS result remarkable in the long run.

Moreover, the necessary electric power for heating the sheets by means of the Joule effect may represent a not at all negligible share of the total produced power of the WECS, and in determined conditions it may even absorb amounts of electric power very close to the produced one. It results Therefore that the actual efficiency of the system is drastically reduced, with a rather unsatisfactory yield in critical operating conditions.

A further drawback is that when the WECS is idle, namely the rotor is in movement without electric power being produced, the electric power needed to prevent or eliminate the ice accretion has to be taken by the [electric grid], and the system is unprofitable in these conditions.

Moreover the said thermo-conducting sheets glued to the blade surface wear out very easily, so requiring often maintenance work and reducing the availability of the machine for generating electric power. The said sheets, substantially made of metallic material, are also a call for the atmospheric [lightning]. The bolts can seriously damage not only the de-icing and anti-icing arrangement, but the available electric devices and machines too, and in some cases cause the failure of the rotor on which the bolts discharge.

Once the said sheets are supplied with important electric power, very strong electrostatic rotary fields are generated, with the consequential pollution and undesired electromagnetic noise effects around the WECS.

A further not negligible disadvantage of the said solutions is that any guarantee given by the manufacturer of the Wind turbine is lost in the moment when such a de-icing and anti-icing arrangement is incorporated in the blade structure, as well as any intrusive device of the blade structure.

Furthermore, as it has been experimentally verified that the ice, in determined environmental and climatic conditions, may build up anywhere on the blade surface, the blade should be almost entirely covered by thermo-conducting sheets.

The consequent manufacturing and maintenance costs reach prohibitive levels, which, together with a not certainly high total efficiency of the system, make it decidedly not remunerative.

As the systems of the type III) are concerned, it exists a patent documentation showing devices for the circulation of heated air inside the blade body, apt to heat up it and also the external surface by means of internal thermal conduction of the material which constitutes the blade body. An example is the German Patent N° DE 196 21 485, the text of which may be referred to for the description and the details of the relevant solution.

In the said patent a recirculation of the internal air has been adopted for each blade, controlled by a fan, and the air is heated by means of electric resistances. All the components are located in the hub of the rotor. In particular, there are provided two pipes, which canalize the heated air in the leading section of the blade, while a pipe is apt to extract it from the rear section of the blade in order to allow the internal recirculation of the air.

The said solution shows the characteristic of having small output holes on the far end of the blade, in order to avoid a hoard of condensed water where the stream is colder being more distant from the heat generator. The far end of the blade is in fact the point where the ice accretion is more likely. In order to bring as much heat as possible to said end, inside the blade we can further provide, close to the leading edge, a continuous support of thermally conducting material, e.g. aluminum. This solution contributes to create an efficient thermal bridge for the heating, as the rotor blade is generally made of composite material with reduced thermal conductivity, for instance resin-glass.

This system shows the following drawbacks. The first is that, with the actual dimensions of the blades, the thickness of which may reach in some points 60 mm, it is necessary to supply plenty of thermal power to the circulating air inside the blade, in order to effectively heat up the whole blade body included the relevant external surface. The wind turbine equipped with such a system, supposing that we succeed in supplying and transmitting all the necessary power for obtaining the anti-icing effect, will show a very low efficiency when there is the danger of icing. This because, aimed to heat up the surface of the blade, we have to heat up the whole blade mass, and there leading the amount of electric power to be transformed into heat is actually remarkable.

It is also known that the use of fans inside rotating elements is highly discouraged by the fan manufacturers too, because there is a high probability of malfunctioning and breakdowns due to the action of Coriolis forces on the rotating parts of the fan.

Summing up, the described solution of forced air circulation may be actually carried out only when the system is stopped, with all the resulting logistic limits that we can easily imagine.

Documents DE 842 330 and DE 198 02 574 illustrate wind turbine anti-icing arrangements for a wind turbine system wherein each wind turbine blade is provided with an opening on its airfoil, located preferably at the end part of the blade span, in connection with an air stream flowing into the blades and warmed by lapping electric current generators/motor parts.

The openings on the airfoil blade are laid out and designed to allow the warmed air stream inside the blade to continuously flowing into the blade for centrifugal effects, so exchanging heat to the blade inner parts in order to heat the blade.

It is also known the German Utility Model N° DE 200 14 238 U1. In this document the air is circulated inside the blade body in the way that the air is heated up by means of the waste heat of the electric devices contained in the nacelle of the wind turbine. A ventilation system being able to operate also with the rotor in operation is employed, as the fan for the forced air circulation is located in the nacelle of the arrangement. It is further provided a continuous heated air distribution system inside each one of the blades.

The realization example has the disadvantage that it is rather complicated and difficult to carry out, because it uses intermediate fluids for realizing the thermal exchange between the waste heat of the electric devices and the circulating air inside the blade.

Moreover it has also the same drawback already seen in the previously cited German patent '485, i.e. that the remarkable thickness of the blade, constituted by poor conducting materials, do not guarantee an effective and efficient heating of the surfaces of the blades.

Furthermore, the heat supplied by means of the forced circulation of the fluid stream inside the electric devices is certainly not sufficient for avoiding the problem of the ice accretion in particularly critic environmental conditions. To this we always have to add a consistent amount of heat, typically obtained by means of the Joule effect.

To be underlined is certainly the poor material thermal conductivity constituting the blade, which remarkably jeopardizes the effective heat exchange between the fluid stream and the blade body. In synthesis, even complicating the construction of the blade with the insertion of thermally conductive metallic parts, which shall reach the far end of it, the arrangement appears of poor effectiveness. The efficacy increases if a great amount of electric power is taken from the electric grid in order to heat up the blade bodies of the wind turbines, with the disadvantage of having a poor total efficiency of the WECS in critic operating conditions.

Summing up, it is indeed the type of heat transmission chosen by the cited patented solutions, namely the heat internal convection from the blade body to the outside surface, which appears to represent the main limit for the de-icing and anti-icing effectiveness. This type of solution leads in fact to use a big amount of thermal power for the desired purpose, not being able to send heat only to the particular surface areas of the blade concerned by ice. In particular, the tip area of the blade, which is the most concerned by the ice accretion, is exactly the area where the said internal airflow arrives with the lowest temperature, having already handed over the heat to the areas close to the root of the blade.

The present invention has the aim of solving the above said drawbacks of the known art, indicating a remarkably improved de-icing and anti-icing arrangement, which can be used in Wind Energy Converting Systems.

Within this scope, it is an aim of the present invention to realize a simple and reliable de-icing and anti-icing arrangement, which needs less maintenance work and shows reduced realization and implementation costs.

A further aim of the present invention is that of increasing in a decisive manner the number of the days in a year wherein the WECS can continuously work with respect to what happens in the systems exploiting the known solutions. The de-icing and anti-icing arrangement according to the present invention can further completely avoiding the stops exclusively due to the danger of icing, or the actual ice accretion on the blades.

Another aim is that of guaranteeing an high efficiency of the WECS also in particularly critic operating conditions for the ice accretion, avoiding the need of stopping it.

A further aim of the de-icing and anti-icing arrangement according to the present invention is that of showing anti-icing properties also when the rotor is idle, i.e. with the electric generator not producing electric power. Such a system in fact can avoid the use of an external electric power source, like f.i. electric power taken from the electric grid.

A further aim is that of facilitating the maintenance work for the individual rotor blades, in particular the cleaning of the surfaces. In fact a problem in connection with the wind turbine operation is the sediment of organic and inorganic residues in the fluid stream hitting the blade, which accumulate particularly on the areas corresponding to the edge of the blade profile, modifying the fluid dynamic characteristics thereof.

A further aim is that of reducing the level of sound emission due to the rotation of the wind turbine blades.

Another aim is that of avoiding or reducing the accretion and the accumulation of said solid sediments on the blades.

For reaching the said aims, the subject matter of the present invention is a WECS comprising a de-icing and anti-icing arrangement and a method for preventing and eliminating the ice accretion on the rotor blades of wind turbines in a WECS, having the characteristics of the attached claims.

Further aims, characteristics and advantages of the present invention will be clear from the following detailed description and the attached drawings, given only as explanatory and non limiting examples, wherein:
- Fg.1 represents a lateral schematic and partially sectional view of a wind turbine in a WECS according to the present invention;
- Fig.2 shows a prospect view of a part of the system of Fig. 1, in particular a part of a blade of the wind turbine;
- Fig.3 shows a bi-dimensional section of the detail of Fig.2;
- Fig.4 represents sectional views of possible embodiments of a part of the detail of Fig.2;
- Fig.5 schematically shows a method for realizing the detail of Fig.2;
- Fig.6 further shows the detail of Fig.4;
- Fig. 7 and Fig. 12 show a lateral and partially sectional view and a schematic view, respectively of a second detail of the wind turbine of Fig.1 and a variant thereof;
- Fig.8 explains the same view of Fig. 1 comprising operational details of the behavior of the airflows of the WECS;
- Fig.9 shows a schematic view of the behavior of the relevant airflows of a variant of the entire WECS according to the present invention;
- Fig. 10 and Fig. 14 respectively show a second and a third variant of a possible configuration of the WECS according to the invention, in a schematic partially sectional view;
- Fig. 11 shows a front view of a few possible embodiments of a detail of the of the WECS of Fig.10;
- Fig. 13 shows a top view of a part of the detail of the of the WECS of Fig. 12.

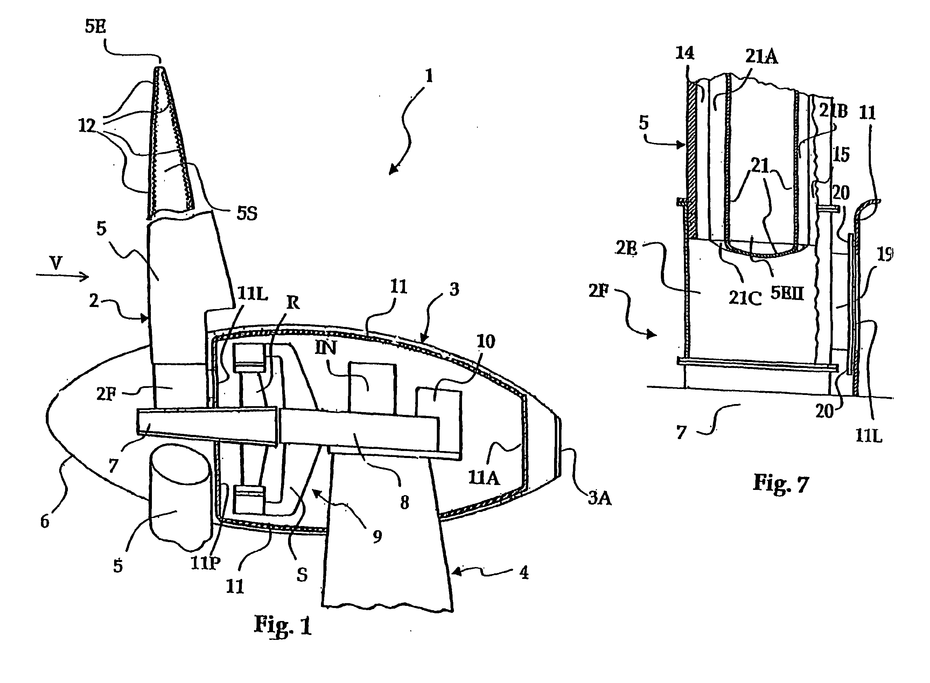

In Fig.1 there is schematically shown a WECS for generating electric power, indicated as a whole with 1, hit by a fluid stream or wind, the arrow thereof being indicated with V. The system comprises known structural elements, like a rotor, indicated as a whole with 2, a nacelle 3 and a tower 4. The tower 4 is set in the ground or in the bottom where the installation of the system 1 is designed. The nacelle 3, located on the tower 4, is oriented depending on the characteristics of the wind by means of known devices and arrangements, which are not shown for the sake of simplicity.

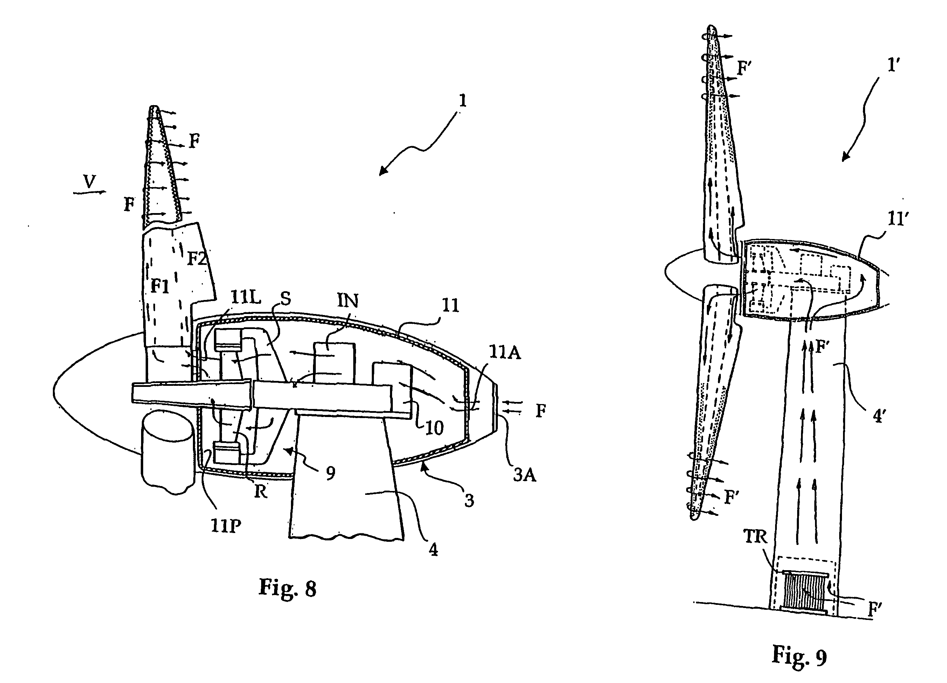

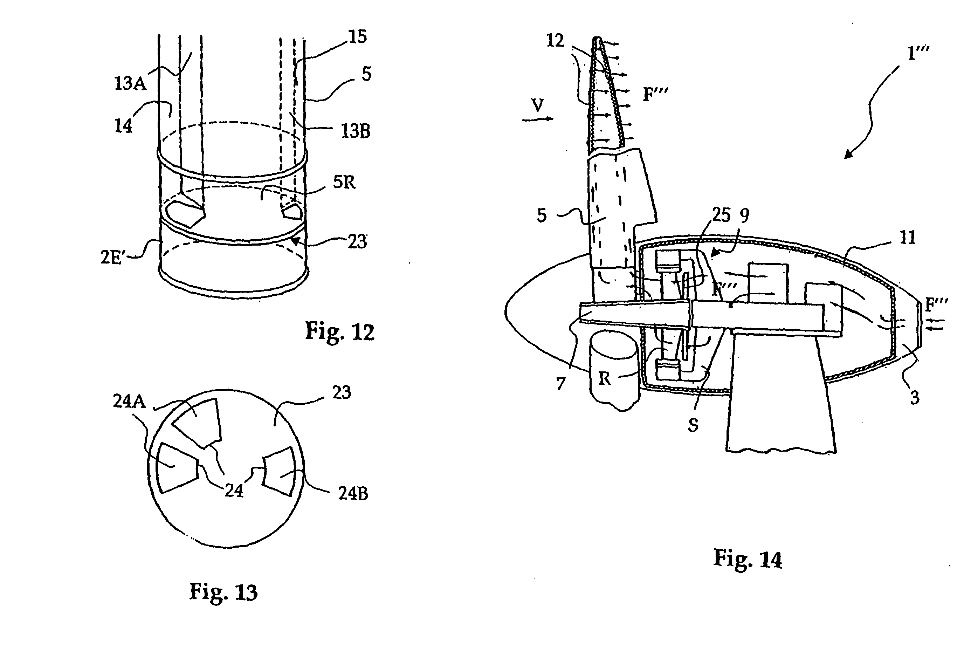

The rotor 2 is characterized by the fact of having at its center a hub 2F, apt to be fitted to a rotating shaft 7 of a wind turbine of the WECS 1. The said hub 2F carries adaptors or "extenders" 2E rigidly connected to its structure. Such adaptors 2E are designed for the bolting, inside them, of each one of the blades 5 of the rotor 2, and can be seen in figures 7 and 12. The rotor 2 of the shown example has three blades 5, which are substantially identical one each other. Associated to the said rotor 2, on the front part of the nacelle 3, there is a fairing or spinner 6 apt to perform both aerodynamic and structural functions. Inside the nacelle 3, and more precisely in a capsule 11, the characteristics of which will be better described in the following, all the components apt to transform the rotational motion of rotor 2 in electric power are comprised, in particular alternating current for supplying an electric grid connected to the WECS 1.

In the said explanatory and not limiting example of the present invention, we can notice, schematically represented in Fig.1 and fitted in a known manner to a shaft 7, from the outside to the inside respectively, the rotor 2 and the rotating part R of an electric synchronous motor 9. Said shaft 7 can rotate with respect to a fixed support 8 of the nacelle 3 of the wind turbine of the WECS 1. On such support 8 the static part S of the electric motor 9 is in turn fixed, which faces toward the rotating part R, in a known manner for allowing the production of electric current when the rotating part R is in motion and the synchronous electric motor 9 is under current. The generated current is sent to an electric intermediate circuit or inverter IN and then forwarded to the electric grid, with the suitable frequency and the designed voltage.

Inside the nacelle 3 there is a further electric unit 10, electrically connected to the inverter IN and/or to the electric grid, comprising the auxiliary power systems apt to supply all the electro-mechanic devices necessary for the operation of the parts of the WECS 1. Such parts are, for instance, the small electric motor which controls tha nacelle sub-distribution system, i.e. the inclination or "pitch" of the blades 5 of the rotor 2 with dependence on the characteristics of the wind, rather than an anemometer for measuring the intensity and the direction of the wind, rather than a computer controlling the operation of said devices and many other known electric arrangements not represented for the sake of simplicity.

The capsule 11, being fixed to the nacelle 3, is substantially closed and constituted of a material with poor thermal conduction characteristics, f.i. a composite material of the resin-glass type. In this way an accumulation volume for the air circulating inside the wind turbine of the WECS 1 is identified. The air, thermally insulated from the external environment, heats up coming in contact with the heated parts of the electric devices 9, 10, IN present inside the capsule 11.

The same capsule 11 shows on the rear one or more openings 11A, with connection of fluid to the outside for the air inlet inside the capsule 11 through one or more openings 3A located on the rear of the nacelle 3. Frontally there are one or more passing windows 11L obtained in a front wall 11P, which allow the sucked air through the openings 11A of the capsule 11 to pass from the accumulation volume to the hub 2F of the rotor 2.

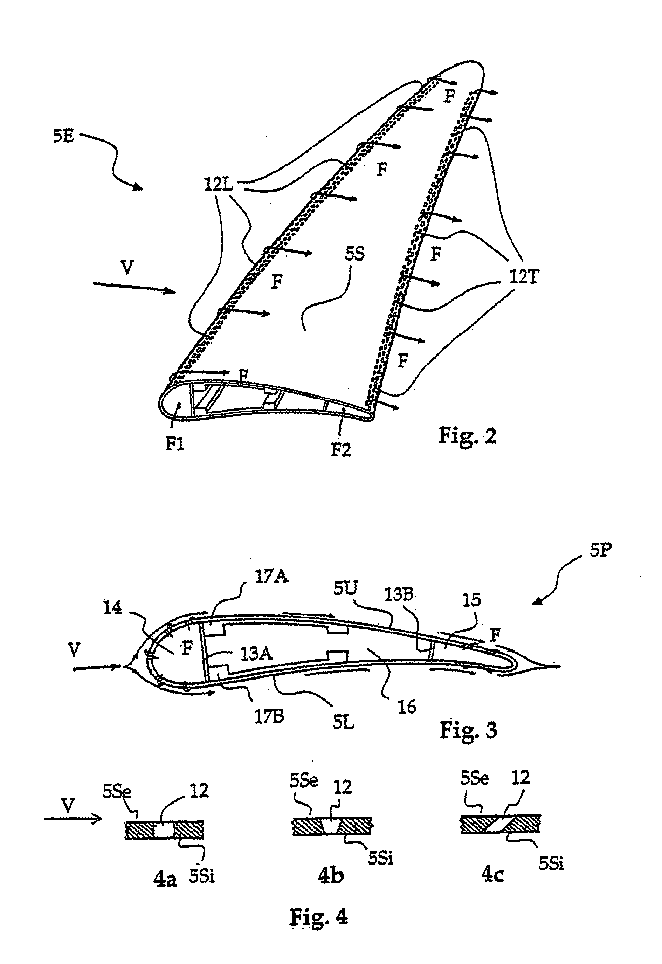

In Fig. 1 there is further shown the tip part 5E of the blade 5, showing on its surface 5S some openings or holes 12 in communication with the inside of the blade 5. Such blade 5 particular can be seen in detail in figures 2 and 3, where there are illustrated respectively a prospect view of the tip part 5E, hit by the wind V, and a generic cross section 5P or profile of the blade 5.

The said holes or openings 12 may be of circular, elliptic or any other section. Said holes 12 may also have equal or different shape depending on the surface 5S area whereon they are located, their characteristics being chosen according to specific studies and numerical-experimental investigations.

Fig. 2 shows the tip part 5E of the blade 5, the surface 5S thereof having a first series of openings or holes 12 near to its leading edge, and a second series of holes 12T near to the trailing edge. Said edges are referred to each one blade 5 profiles relating to the cross sections 5P along the longitudinal progress of the blade 5. With F arrows showing the airflow through said surface 5S openings or holes 12 are indicated.

The tip part 5E is internally divided by two bulkheads 13A e 13B, clearly illustrated in Fig.3, substantially identifying three volumes: a first volume 14 in correspondence of the first series 12L of holes 12, a second volume 15 in correspondence of the second series 12T of holes 12, and finally a third volume 16, which is comprised between the other two, namely being located in correspondence of the middle part of the profiles. Inside the third volume 16 there are located two girders 17A e 17B having supporting function, which are associated to the blade 5 surface 5S according to known technique. The surface 5S of each blade 5 is constituted by two semi-shells 5U e 5L, respectively the upper and the lower one, generally made of composite material like resin-glass.

In Fig.4 three different possible holes 12 architectures present on the blade 5 surface 5S are indicated, namely:
1) a first type shown in the view 4a, where the hole 12 has a constant section for the air flowing from the inside surface 5Si to the external surface 5Se of the blade 5;
2) a second type shown in the view 4b, where the hole 12 is divergent and showing a substantially orthogonal shaft with respect to the direction of the current V outside the blade 5, as in case 1);
3) a third type shown in the view 4c, instead showing a hole 12 with substantially parallel walls and inclined shaft, forming a determined acute angle with respect to the shaft orthogonal to the outside surface, with such an orientation that the out-flowing air has a direction following the external current V direction.

In figures 2 and 3 there is also shown the behavior of the airflows circulating in the blade when the de-icing and anti-icing arrangement according to the present invention is operating. Such behavior will be better explained in the following. There is an airflow interesting the first volume 14 indicated in Fig.2 with arrow F1, and an airflow in the second volume 15 indicated with arrow F2. Both airflows F1 e F2 move from the root to the tip of each blade 5. With F it is then pointed the fluid flow circulating inside the wind turbine of WECS 1, which just arriving to the surface 5S flows out from the holes 12 forming a fluid film, as better specified in the following.

In Fig.3 with F the air inside the blade 5 flowing out from the holes 12 is indicated, mixing to the outside fluid current V.

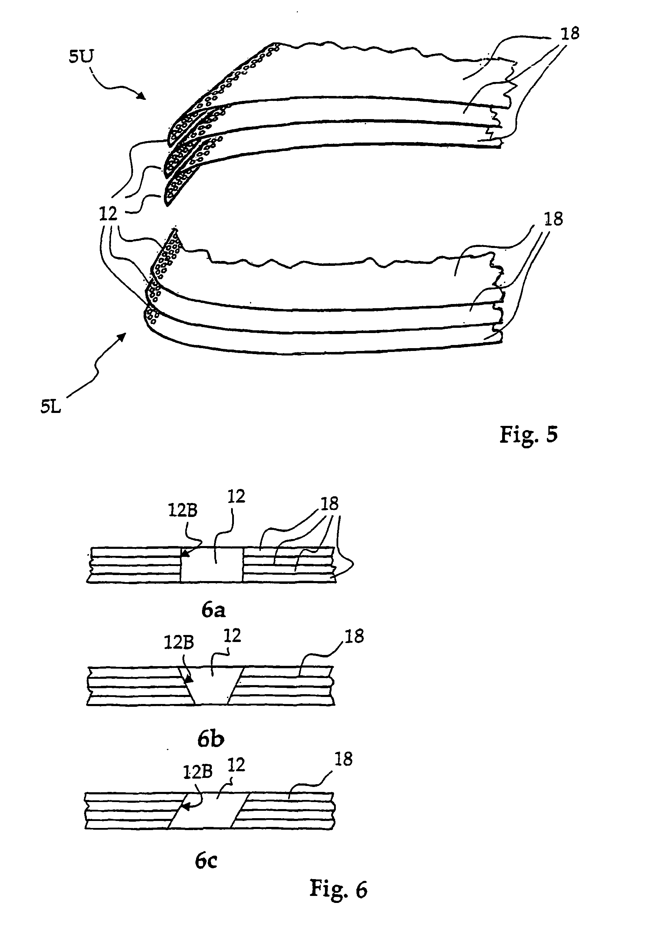

Figures 5 and 6 show the particular manufacture of the two semi-shells 5U and 5L forming the outside shell, namely the outside surface 5S of each blade 5. In particular, said semi-shells 5U and 5L are made through overlapping a number of composite fibre sheets 18, where inside the holes or openings 12 are already carried out. In this way the problem of the composite fibre weakening due to a mechanical drilling aimed to obtain the holes 12 is overcome. Such sheets 18 are then joined by means of gluing or other known methods of making said semi-shells 5U and 5L, which then are ready to be assembled together and to the bearing blade 5 structure by known technical methods, herein being not cited for sake of simplicity.

Fig.6 shows, in the views 6a-6c, the sheets 18 arrangement and conformation in proximity to each one of the holes 12. The sheets 18 presenting borders 12B, apt to individuate the passage for constituting each hole 12, already fabricated so to be in line with each one of the holes 12 shaft present on the blade 5 surface 5S, are to be noticed. Views 6a, 6b, 6c correspond to views 4a, 4b, 4c of the types of holes 12 previously discussed.

Fig. 7 shows the detail of the rotor 2 hub 2F, in the location where the blade 5 is inserted into the hub 2F, in a partially sectioned assembled view according to a broken plane passing through the middle plane of the blade 5. There is also shown the detail of the extender 2E, being substantially cylindrical shaped, that has on the lateral side a mouth 19 facing toward the capsule 11 of the nacelle 3. The hub 2F is made in the manner that it presents a circular ring in correspondence of the capsule 11 window 11L, said ring being interrupted by mouths 19 in correspondence of each one of the rotor 2 blades 5. Between the mouth 19, which allows the fluid flow through the window 11L to the capsule 11, and the inside part of the extender 2E known holding elements 20, not here detailed for sake of simplicity, are provided. Such holding elements 20 are apt to allow the air flow from the capsule 11 to the mouth 19 and then inside the extender 2E without any external leakage, even if the rotor 2 is in movement, i.e. when the wind turbine of WECS 1 is working. The blade 5 root 5R engages one of the bases of the said cylinder forming the extender 2E.

In the sectional view of Fig.7 with 21 there is indicated the assembly of the internal baffles apt to deviate the inner airflow coming from the capsule 11 and the hub 2F. In particular, inside the blade 5 there is present a first baffle 21A apt to define said first volume 14 inside said blade 5, which is connected in a known manner to the first bulkhead 13A of the blade 5 tip part 5E. In the same way a second baffle 21B is joined to the second bulkhead 13B for defining the second volume 15 inside the blade 5.

A third baffle 21C, joined to the preceding baffles 21A e 21B, is present in the extender 2E so forming, once assembled the blade 5 to the extender 2E, only one inner baffle 21 for baffling the airflow circulation inside the two volumes 14 e 15.

Fig. 8 shows the airflow F circulation in the wind turbine of the WECS 1, which constitutes the means for realizing the de-icing and anti-icing effect according to the present invention, with modalities as explained in the following.

The airflow F path circulating in the wind turbine of the WECS 1 with the rotor 2 in operation is described as follows.

The airflow F flows in from the opening 3A of the nacelle 3 and, through the opening 11A of the capsule 11, arrives in the accumulation volume constituted by the internal space of the capsule 11. Here it laps on the electric unit 10, the inverter IN and, getting through the static part S holes, the electric motor 9 rotating part R. From here, through the window 11L, the flow F reaches the rotor 2 hub 2F and then the inner part of the blade 5, namely the first and the second volume 14 and 15. Inside the hub 2F, in fact, the flow F is deflected due to the presence of the baffles 21 (see Fig.7), going inside the tip part 5E of each blade 5, with the bulkheads 13A and 13B clearly identified in figures 2 and 3. In this way, inside each one of the blades 5 two separate airflows F1 and F2 are generated, going respectively from the root to the tip of the blade 5, one in the first volume 14 and the other in the second volume 15, until flowing out through the first series 12L and the second series 12T of holes 12 present on the surface 5S of each one of the blades 5.

Such airflow F behavior is substantially caused by the global pressure differences generated between the internal and the external flows, considering the rotor 2 turning motion and the relevant kinetic effects, according to the known modalities.

With reference to figures 2, 3 and 4, the airflow F flowing out from the holes or openings 12 interacts with the wind V hitting on the 5 and creates a air layer or film upon the blade 5 outside surface 5E concerned with the holes 12, namely downstream of it. Such air film, due to known thermal and dynamic effects, deflects the fluid stream of the wind V from the direct impact with the outside blade 5 surface 5S, so heating the stream and preventing that wind V humidity particles from condensing and making ice.

This outflow from the holes 12 prevents the direct impact of the wind V with the surface 5S not only of the humidity particles, but of any body having a relatively small mass with respect to the air outflow mass. For instance, the small insects which plentifully accumulate on the wind turbine rotor blades are baffled, obliging the system to be periodically stopped for removing them.

The holes or openings 12 are made in vicinity of the leading edge and the trailing edge of each blade 5 profile 5P, as these are the points where the blade temperature is the lowest and the fluid stream pressure of the wind V applying to the surfaces 5S the highest, and therefore the greatest is the risk of ice particles accretion. Such a specific holes 12 arrangement is realized in this example, but a different arrangement could be advantageously realized on the entire profile, canalizing for instance the air also inside the third volume 16 (see Fig.3).

In order to better prevent the icing danger, it is convenient to create a fluid air film F uniformly flowing out from the holes 12 not only along the entire profile 5P, but along all the outside surface 5S of each blade 5 concerned by the holes 12. For this, the air shall have the suitable enthalpy content, and the holes and the conduits be sized for giving to the air outflow F the suitable values of mass, pressure, direction, verse and intensity with reference to the outflow velocity from the holes 12. To this purpose the holes 12 can be suitably sized and some examples are shown in Fig.4.

As known, the hole 12 of the view 4a allows a fluid F outflow being orthogonal to the wind V, the hole of the view 4b allows a pressure recovery and therefore a slowing down of the outflow speed, while the one of the view 4c can actually contribute to energizing the fluid stream of the wind V hitting each profile 5P. Such energizing process, as known from the aeronautical literature, may improve the global aerodynamic performances of the blade 5 and therefore the aerodynamic efficiency, so increasing the global performance of the WECS 1, namely a greater power to be obtained on the wind turbine main bearings. In fact, with the proper enthalpy content concerning the air circulating inside the WECS 1, the air outflow F can reach such an aim having a determined angle with respect to the direction of the fluid stream of the wind V hitting the surface 5S of each one of the blades 5.

Summing up, the present invention consists in a de-icing and anti-icing arrangement implemented in a WECS exploiting the fluid thermo-dynamic effects of the fluid air outflow on at least a portion of the wind turbine rotor blade, which in turn has an enthalpy content certainly greater than the wind which moves the wind turbine. Moreover such a system, in order to increase the enthalpy content of the fluid air outflowing, exploits the same heat coming from the electrical devices present in the generator, that necessarily dissipate during their operation.

In fact the behavior of the fluid F in the described WECS 1 can show two clearly different operating conditions, and namely:
1) with the rotor R connected, and therefore with electric power generation and heat dissipation coming from all the electric devices present in the capsule 11 of the WECS 1;
2) With the rotor R of the electric motor 9 idle, and therefore without electric power generation and heat dissipation.

In condition 1) the air taken form the environment surrounding the WECS, with pressure substantially equal to the ambient pressure, heats up in the accumulation volume coming in contact with the electric devices 9, 10, IN present in the capsule 11 before flowing out from such a volume, i.e. from the capsule 11. Moreover the air loses humidity and condenses coming in contact with the walls of all the elements of the WECS 1. Therefore from the holes 12 flows out a airflow F with higher temperature and greater pressure with respect to the fluid stream of the wind V hitting the blade surface 5S, and with a remarkably lower humidity degree.

Condition 2) differs from condition 1) for the lack of a significant thermal exchange between the airflow F and the electric devices 9, 10, IN, while the remaining of the described phenomena and the anti-icing effect too is unchanged.

We would like to underline the fact that the air outflow F flowing out form the holes 12 interacts fluid thermo-dynamically not only with the fluid stream of the wind (V) hitting the outside surface 5S concerned with the openings 12, but with any other fluid or solid which is possibly present on the outside surface 5S of the blade 5, like water or ice. The WECS 1 wind turbine could in fact be in operation with a heavy rain, or with some ice which has been formed previously.

Another point to be highlighted is the pulsating character of the airflow F in the de-icing and anti-icing arrangement, at least in the passage between the accumulation volume i.e. the capsule 11 and the hub 2F, and from here to inside the root 5R of the blade 5.

The airflow F in fact does not pass with continuity from the window 11L of the capsule 11 and the hub 2F mouth 19, because the mouths 19 are located only in correspondence of each one of the blades 5. Therefore the fluid F is aspired inside each blade 5 each time that the relevant mouth 19 is connected to the window 11L. Each blade is so supplied intermittently every round and during a determined angular excursion of the rotor 2. Such intermittence is variable conforming the front wall 11P of the capsule with several windows 11L located on a circumference, at a height corresponding to that of the mouths 19 of the hub 2F. At the best said windows 11L could form a substantially continuous circular ring.

The intermittence guarantees that the airflow F remains a longer time in the accumulation volume, hence with the possibility of acquiring a greater enthalpy contents at the entry of the root 5R of each blade 5.

Thanks to the previous detailed description as well as the operation of the representative and not limiting example of the present invention, the following advantages are clear of the de-icing and anti-icing arrangement.

The de-icing and anti-icing arrangement is of simple and reliable realization, it does not need any control system once its various parts have been suitably dimensioned. It shows therefore reduced realization and implementation costs with respect to the known systems, which however are less effective.

Moreover it is intrinsically safe operating, due to its simplicity and the lack of management and control systems which lead to a very small risk of malfunctions.

Another advantage is that of assuring a high efficiency of the WECS, and avoiding stops even in operating conditions, which are particularly critical for the ice accretion. Summing up, the number of days of a year in which the WECS can operate continuously is remarkably increased with respect to what happens with the systems using the known solutions.

Such an effectiveness of the de-icing and anti-icing arrangement is due to the thermal and fluid-dynamic effects generated by the fluid flowing out from the holes. The thermal effect is essentially due to the formation of a boundary thermal layer with increased enthalpy where the drops absorb heat for partially or totally vaporizing, so avoiding the ice accretion on the surface of the blade. The fluid-dynamic effect consists in the deviation which the air film induces on the drops of water and the hitting particles of various nature (f.i. insects, sand).

This effect is maximum at certain speed and grain size.

Another advantage of the de-icing and anti-icing arrangement is that of being effective even if the rotor is in idle condition, or when the generator does not generate electric power. The system in effect does not need electric power to correctly operate, and therefore does not need to draw current from the electric grid, unlike some known solutions.

Another advantage is that of reducing both the number and the duration of the stops of the system, due to the need of removing the solid residues from the rotor blades.

Furthermore said system does not alter the structural strength of the blades, and the manufacturer warranty for the rotor blades keep their validity.

Another advantage concerns the reduction of the noise produced by the rotating blades, thanks to the favorable interaction between the fluid stream flowing out from the holes of the rotor blade and the main stream hitting it.

Another advantage is that of substantially exploiting all the heat dissipated by the electric power devices present in the WECS for increasing the enthalpy contents of the circulating fluid producing the de-icing and anti-icing effect. In other words, when the rotor is idle, almost all the power not collected from the main bearings of the WECS wind turbine/s and from the electric grid is recovered for de-icing and anti-icing purposes.

It is clear that several variants of the de-icing and anti-icing arrangement for a WECS according to the present invention are possible for the skilled in the art, without exiting from the novelty principles of the inventive idea; it is also clear that in the practical implementation the shape of the described details can be different, and the details could be replaced by technically equivalent elements.

Fig. 9 shows a schematic view of a variant of the WECS as a whole in a possible embodiment, indicated with 1'. Said variant, with respect to the system of Fig.8, has a slightly different configuration of its parts, apt to establish an internal airflow F' with a slightly modified course shown in the same figure.

In particular, said WECS 1' is of a type which accommodates an electric transformer TR inside the carrying tower 4', namely in correspondence of the ground in order to not have other considerable suspended masses. In vicinity of the transformer TR there are present in the base of the tower 4' air intakes for the entry of the circulating airflow F' inside the WECS 1', so that the intake airflow laps the said transformer TR. Such air intakes are the only ones present in the whole system 1', as the capsule 11' in this variant embodiment is closed on the rear. In exchange the said capsule 11', which still constitutes an accumulation volume for the airflow F', presents openings connecting the fluid with the tower 4', for the passage of the fluid F from the tower 4' to the inside of the capsule 11'.

The airflow F' is therefore sucked into the base of the tower 4', laps the transformer TR and is canalized up the tower 4', till it flows into the accumulation volume, i.e. the capsule 11'. The remaining path is fully analog to the case of the system of Fig.1.

In the variant of Fig. 9 the airflow F, circulating inside the WECS and flowing out from the rotor blades holes, acquires further heat from the contact of the transformer TR.

Advantageously said transformer may be provided with suitable fins in order to allow the passage of the heat to the airflow, as well as all the electric power devices present in the nacelle of the system.

It has to be pointed out that today systems are designed with towers reaching also heights greater than one hundred meters. As a consequence the additional path that the airflow F' covers will favor the condensation of the humidity also through the contact with the internal walls of the tower, or possible serpentines and guided paths inside it.

The described variant advantageously allows to increase the enthalpy contents of the airflow F destined to implement the fluid thermodynamic effect on the blades of the wind turbines of the WECS, reducing at the same time its humidity grade. In this way the effectiveness of the de-icing and anti-icing arrangement according to the invention is improved, as it is able to withstand even more critic ambient conditions as the possibility of ice accretion on the rotor blades is concerned.

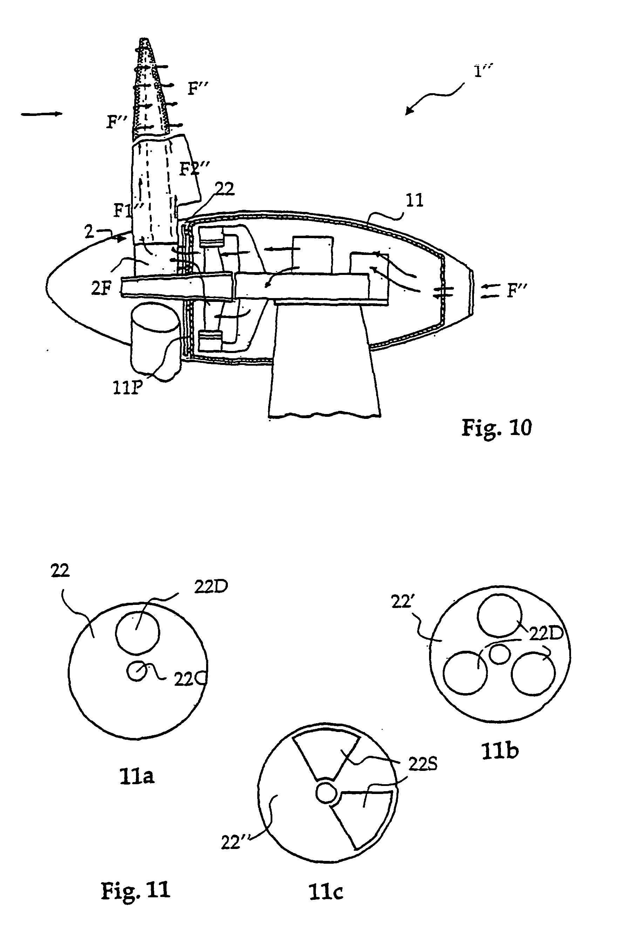

In Fig. 10 there is shown another possible variant of the de-icing and anti-icing arrangement, as well of the WECS including the system, indicated as a whole with 1", in a schematic view, wherein there is further indicated the airflow F" constituting the main means for implementing the said system.

This variant differs from the system of Fig.1 in the area before the capsule 11, between the capsule and the rotor hub 2F of the system 1". In said area there is installed on the shaft 7 a movable distributing disc 22, facing the front part 11P of the capsule 11. Examples how to conform said distributing disc 22 for obtaining a distribution, and so a different intermittence, of the 1 fluid F" inside the root 5R of each one of the blades 5 of the rotor 2, are shown in Fig. 11.

Said distributing disc 22 can be shown, inserted between a key hole 22C (see Fig. 11) on the disc 22, and the shaft 7 of the system 1'' whereto it is keyed, means for changing the angular speed. Said means, specifically known as reduction/ multiplication mechanisms and/or small motors, are not represented for the sake of simplicity and have the purpose to vary angular speed of said disc 22 with respect to the shaft 7 whereto is fastened.

In the view 11a of Fig. 11 there is shown the version of distributing disc 22 having only one hole 22D, with a size substantially corresponding to that of the mouth 19 of the hub 2F of the rotor 2 whereto it is faced. In the view 11b there is shown another distributing disc 22' with three holes, each hole 22D having the same characteristics of the single hole 22D of the disc 22. In the view 11c there is shown a distributing disc 22" having identical openings 22S shaped as circular sectors, asymmetrically distributed with respect to the center of the disc.

Between the distributing disc 22 and the front wall 11P, as well as between the disc 22 and the mouth 19, known holding means being not shown in detail for the sake of simplicity are inserted.

The different conformations of the distributing disc 22, 22', 22" advantageously allow, together with the cited means for changing the angular speed, to obtain different possibilities of intermittence wherewith the airflow F" enters into the blades 5 of the WECS.

In this way it is advantageously possible to obtain a particular intermittence possibly required by experimental tests, once verified that such intermittence values of the flow do improve the effectiveness of the de-icing and anti-icing arrangement of the WECS in determined operating and ambient conditions.

The distributing discs 22, 22', 22" of Fig. 11 can be further used in another variant of the WECS according to the invention. They, together with the said means for varying the angular speed, can be in fact directly inserted inside the front wall 11P of the capsule 11 of the WECS 1", replacing the fixed partition present in the configuration of Fig. 10. In this case there are present known radial holding means between the external side of the discs 22, 22', 22" and the internal side of the front wall 11P of the capsule 11, in order to keep the necessary insulation of the accumulation volume of the circulating airflow F".

Advantageously such a variant shows a minor constructive complexity with respect to the variant of Fig. 10, at the same time allowing a great variability of intermittence for the circulating airflow F".

Fig.12 shows a further variant of the de-icing and anti-icing arrangement or the WECS according to the invention. In particular it shows a schematic prospect view of the assembly of the blade 5 and the extender 2E', wherein the passage for the airflow F is present in the hub of the rotor, not shown for the sake of simplicity. The extender 2E', unlike the extender 2E of the fig. 1, consisting of a simple cylinder in one piece with connection function between the hub 2F and each one of the blades 5, has in fact a substantially cylindrical shape, but shows particularities. In effect, inside the extender 2E' there is present a second distributing disc 23, placed against the root 5R of the blade 5, assembled in the extender 2E'. Said second disc 23 is coupled to the extender 2E' movable in angular sense with the aid of known devices present in the extender 2E' and not shown for the sake of simplicity. Thanks to this, the second distributing disc 23 is substantially apt only to rotate on a shaft substantially coinciding with the directrixes of the cylinder composing its the lateral surface.

It has to be noticed, inside the root 5R of the blade 5, the partial views of the first bulkhead 13A and second bulkhead 13B, which respectively delimit the first internal volume 14 and the second internal volume 15 for the passage of the relevant airflows F1 and F2 in direction of the end of the blade 5E and therefore of the outflow holes or openings 12.

In Fig.13 there is shown in a top view the second distributing disc 23, in a possible embodiment. It shows windows 24 having the shape of circular sectors, with dimensions substantially corresponding or slightly smaller than the passage sections of the volumes 14 and 15.

It is evident that such passage sections are defined by the shape and arrangement of the relevant first bulkhead 13A and second bulkhead 13B of the blade 5, which identify a determined extension both in a radial and circumferential sense. We have therefore a first type 24A of windows 24 provided to open the passage towards the first volume 14 defined by the first bulkhead 13A, for the passage of the airflow F towards the surface 5S of the blade 5 in correspondence of the leading edge of the relevant profiles 5P. Analogously a second series 24B of windows 24 is shaped for the passage of the airflow F into the second volume 15 and from here to the surface 5S of the blade 5 in vicinity of the trailing edge of the relevant profiles 5P.

In this representative embodiment as example, the second distributing disc 23 is virtually divided into six identical angular sectors, three destined to face the first volume 14 and comprising the two windows 24A of the first series, and other three destined to face the second volume 15 and comprising the single window 24B of the second series. As a consequence there are substantially three operating possibilities for this second distributing disc 23:
1) The windows 24 are arranged in correspondence of the volumes 14, 15 inside the blade 5 for allowing the passage of the airflows F1, F2 into the relevant volumes 14, 15, as shown in Fig. 12;
2) one window 24A of the first type is arranged in correspondence of the first volume 14, for the passage of the airflow F1, while the passage to the second volume 15 is stopped;
3) no window is in correspondence of the volumes 14, 15 and therefore there is no supply of air to them.

Advantageously the solution of Fig. 12 and Fig. 13 allows further possibility of adjustments for the de-icing and anti-icing arrangement of the WECS, in particular in the control of the airflow distribution provided to outflow from the holes or openings of the rotor blades. For instance, we could decide to interrupt the air outflow from the holes for a determined period of time in order to increase the enthalpy content of the flowing out stream.

A further variant of the WECS comprising the de-icing and anti-icing arrangement according to the invention is that of providing fan and/or compressing means inside the capsule 11 of the nacelle 3 to carry out a forced convection of the airflow F designed to outflow through the holes or the openings 12 of the rotor blades 5.

Advantageously this solution could allow the control of other two parameters for increasing the effectiveness of the de-icing and anti-icing arrangement, i.e. the mass and the pressure of the airflow F as output.

Fig. 14 shows a possible implementation of a fan and/or compressing element 25 in a WECS 1"' according to the invention. In particular such element is fastened on the rotating shaft 7, between the electric motor 9 rotating part R and the static part S. Element 25 may be of the type with variable pitch blades, for a better control of the airflow F"' inside the capsule 11, making it possible to vary said airflow F"' parameters.

Said airflow F"' path is totally analog to that shown in Fig.8, with the difference that it is possible to introduce an acceleration or increase of the pressure according to well known related thermodynamic phenomena.

A further possibility of said variant has to be underlined. Considering the option of being provided inside the capsule the use of a compressor apt to decidedly increase the pressure of the airflow directed to the outflow holes or openings, specifically the second series of holes (12T in Fig.2) shaped as in the view 4c. As known from the aeronautic literature, the outflow of a certain mass of air with a determined speed through a certain shape of holes in vicinity of the trailing edge of the profiles, brings to an improvement of the blade characteristics aerodynamic efficiency, so allowing the blade to operate on the fluid stream with a greater incidence angle.

In conclusion such a solution can allow, the installed power being the same, a greater electric work to be collected during one year by the WECS according to the present invention.

Furthermore a structural and dynamic masses reduction is achieved, the electric work produced during one year being the same, as well as a saving of the installation, management and maintenance costs, a reduced environmental impact on the territory where the system is located.

Another variant of the de-icing and anti-icing arrangement according to the present invention is that of providing, inside the blade, canalizations of material with poor conducting thermal properties, which lead the airflow to the blade areas, which are selectively provided with holes 12 for the outflow.

Advantageously such a variant would allow the fluid to keep practically unchanged its enthalpy content till the air out-flowing through the holes or openings, and consequently a better anti-icing effectiveness.

As the blades de-icing problem is concerned, i.e. the possibility of eliminating the ice already made for contingent reasons, the de-icing and anti-icing arrangement can be equally effective. In fact, further variants to the WECS and the contained system according to the present invention can be provided. Supplying heat to the air inside the capsule of the gondola, for instance by means of thermo-resistors taking for a sufficient time enough electric power from the electric grid network, it is possible to heat up the first ice layers formed in correspondence of the openings or holes, until the ice masses slide down from the outside surface of the blades, so freeing them.

A further and interesting variant is that of providing, inside the WECS, a small air-compressing device. Suitably arranging the nozzles of the said device inside the first and the second volume inside each one of the rotor blades, the nozzles being directed towards the holes or openings partially or totally covered by the ice, we can deliver pulses of compressed air. Such an action leads to the fragile breakage of the ice masses, which in this way will fall down to the ground, so definitively freeing the blade. Both of the two just cited variants may be provided in the same WECS.

Advantageously the de-icing and anti-icing arrangement according to the present invention further allows the installation of systems and/or devices apt to provide the so-called deicing effect even if the rotor is stopped. Although the said de-icing and anti-icing arrangement allows the continuous operation of the WECS also in particularly critic environmental conditions, the reason for the stop may be due for instance to the need of WECS temporary maintenance works.

Another variant embodimentof the WECS is of providing, on the blade surface, holes dedicated to the outside introduction of fluids for the cyclic cleaning of the blades, like alcohol or surface-active means. Advantageously in this way the maintenance is made easier apt to clean the blades and restore them to the original status.

In order to provide for the flowing in of a greater fluid air mass into the inner capsule of the nacelle, a further variant is of providing a dynamic air intake associated to the nacelle. Such an air intake is conveniently shaped in a way to have an inlet section as orthogonal as possible with respect to the direction of the wind, and a passage through the capsule for sending the wind inside the capsule, and therefore to the accumulation volume. For its arrangement on the nacelle, it would be better to provide it in the rear part of the nacelle, and this for two reasons.

The first one for not having a particularly vortical inlet fluid stream and therefore with a lower pressure than that of the surrounding atmosphere. The second reason is due to the need that such fluid stream may lap all the electric power devices or systems present in the accumulation volume, so maximizing the enthalpy content of the airflow circulating by the de-icing and anti-icing arrangement.

Still for maximizing the thermal exchange, we may also provide the WECS with a wind turbine capsule internally covered with metal or thermally conducting material, and may connect such coating to the fins of the electric power devices. With such a solution a thermal bridge can be advantageously carried out, further increasing the heat exchange and so the convection inside the accumulation volume of the system.

## Claims

1. A Wind Energy Converting System aimed to the production of electric power comprising a de-icing and anti-icing arrangement, said Wind Energy Converting System (1; 1'; 1"; 1"') being of a type comprising:
- a tower (4; 4'), adapted to support and fix said WECS (1; 1'; 1"; 1"') to the ground or a basement,
- a nacelle (3), located on said tower (4; 4'), whereto first means (9, IN, 10; TR) for transforming the rotating movement of a rotor (2) in order to generate electric power to be introduced into an electric grid and for the management and the operation of possible electric devices of said Wind Energy Converting Systems (1) are associated; the rotor (2), associated to said nacelle (3) in the manner that it can be turned with respect to said nacelle (3), said rotor (2) comprising a number of blades (5) and being susceptible of rotating because of the wind (V) hitting said blades (5), said Wind Energy Converting System (1; 1'; 1"; 1"') internally comprising second means (2E, 19, 21) for the flow of a fluid (F; F'; F"; F"') inside volumes (14, 15) defined in the interior of said blades (5) of said rotor (2), the blades (5) of the rotor (2) comprising, on at least part of an external surface (5S) of said blades (5), openings (12) in connection with the fluid of said volumes (14,15),
**characterized in that**, said openings (12) are adapted to create an air layer or film upon the blades (5) outside a blade surface (5E) concerned with said openings (12), by fluid-thermodynamical interaction with said wind (V) hitting at least said blade surface (5E) concerned by said openings (12), and/or with water and ice present on said external surface (5S) of said blade (5).

2. A Wind Energy Converting System, according to claim 1, **characterized in that** said openings (12) comprise a first series (12L) of holes, in connection with the fluid of a first (14) of said volumes (14, 15) inside said blades (5), said first series (12L) of holes being located substantially in vicinity of the leading edge of the profiles (5P) which constitute each one of the blades (5) of said rotor (2).

3. A Wind Energy Converting System, according to the previous claim, **characterized in that** said openings comprise a second series (12T) of holes (12), in connection with the fluid of a second (15) of said volumes (14, 15) inside said blades (5), said second series (12T) of holes (12) being located substantially in vicinity of the trailing edge of the profiles (5P) constituting each one of the blades (5) of said rotor (2).

4. A Wind Energy Converting System, according to claim 2 or 3, **characterized in that** the said openings (12) in connection with the fluid of said volumes (14, 15) inside said blades (5) are preferably located on the tip part of each one of the blades (5) of said rotor (2).

5. A Wind Energy Converting System, according to any of the previous claims, **characterized in that** said nacelle (3) internally comprises third means (11; 11') associated to said first means (9, IN, 10; TR) adapted to constitute an accumulation volume for said fluid (F; F'; F"; F"') for facilitating the thermal exchange between said fluid (F; F'; F"; F"') and the heated surfaces of said first means (9, IN, 10; TR) of said Wind Energy Converting System (1; 1'; 1"; 1'").

6. A Wind Energy Converting System, according to the previous claim, **characterized in that** it comprises fourth means (11A, 11L, 3A; 25) for the circulation of said fluid (F; F'; F"; F"') inside said third means (11; 11').

7. A Wind Energy Converting System, according to the previous claim, **characterized in that** it comprises first distribution means (22, 22', 22") associated to said second means (2E, 19, 21) of said Wind Energy Converting System (1; 1'; 1"; 1"') for the passage of said fluid (F; F'; F"; F"') inside said volumes (14, 15) defined inside said blades (5), and to said third means (11; 11') adapted to constitute said accumulation volume for said fluid (F; F'; F"; F"'), said first distribution means (22, 22', 22") being adapted by means of said associations to generate an intermittent flow of said fluid (F; F'; F"; F"') getting from said third means (11; 11') inside said second means (2E, 19, 21) through said fourth means (11A, 11L, 3A; 25) of said Wind Energy Converting System (1).

8. A Wind Energy Converting System, according to the previous claim, **characterized in that** said first distribution means (22, 22', 22") are located between said third means (11; 11') and said second means (2E, 19,21) of said Wind Energy Converting System (1).

9. A Wind Energy Converting System, according to claim 7 or 8, **characterized in that** said first distribution means (22, 22', 22") are of a type adapted to vary the intermittence value of said intermittent flow of said fluid (F; F'; F"; F"').

10. A Wind Energy Converting System, according to any of the previous claims, **characterized in that** second distribution means (2E', 23) are provided in said rotor (2) and are adapted to selectively control the entry of said fluid (F; F'; F"; F"') into said volumes (14, 15) defined inside said the blades (5).

11. A Wind Energy Converting System, according to the previous claim, **characterized in that** said second distribution means (2E', 23) are of a type adapted to selectively allow the entry of said fluid (F; F'; F"; F"') into said first volumes (14) and/or said second volume (15) or in none of said volumes (14, 15) of said Wind Energy Converting System (1).

12. A Wind Energy Converting System, according to claim 5, **characterized in that** said third means (11; 11') comprise a capsule (11; 11') movably associated to said nacelle (3).

13. A Wind Energy Converting System, according to the previous claim, **characterized in that** said capsule (11, 11') is, in its external envelope, substantially made of material with poor thermal conductivity.

14. A Wind Energy Converting System, according to claims 12 or 13, **characterized in that** said capsule (11, 11') is at least in part internally coated with thermal conductive material in connection with said first means (9, IN, 10; TR) for transforming the rotating motion of a rotor in electric power to be sent to an electric grid and for the management and the operation of possible electric operating devices of said Wind Energy Converting System (1), so as to constitute a thermal bridge for the heating of said fluid (F; F'; F"; F"') circulating inside said capsule (11, 11').

15. A Wind Energy Converting System, according to claims 6 and 12, **characterized in that** said fourth means for the circulation of said fluid (F; F'; F"; F"') inside said third means (11; 11') comprise at least a window (11L) in the front wall (11P) of said capsule (11, 11'), and at least an opening (11A) shaped on the rear of said capsule (11, 11'), as well as one or more openings (3A) located in the rear part of said nacelle (3).

16. A Wind Energy Converting System, according to any of the previous claims, **characterized in that** said rotor comprises a hub (2F), which can be rigidly associated to a rotating shaft (7) of said Wind Energy Converting System (1; 1'; 1"; 1"'), said rotating shaft (7) being in turn rigidly connected to said first means (9, IN, 10; TR) for transforming the rotating motion of a rotor in electric power to be sent to an electric grid, an extender (2E; 2E') for each one of said blades (5) of said rotor (2) rigidly connected on one side to said hub (2F), and on the other side to a root (5EII) of said blade (5).

17. A Wind Energy Converting System, according to claims 12 and 16, **characterized in that** said second means comprise an extender (2E) having at least a mouth (19) facing towards at least a window (11L) of said capsule (11), as well as baffles (21) for deviating the flow present both in said extender (2E) and in said root (5EII) of said blade (5).

18. A Wind Energy Converting System, according to claims 8 and 16, **characterized in that** said first distribution means comprise a distributing disc (22, 22', 22"), associated to said rotating shaft (7), located between said front wall (11P) of said capsule (11; 11') and said rotor (2), in particular said distributing disc (22, 22', 22") showing transition means (22D; 22S) so that in at least an angular position of said distributing disc (22, 22', 22") said transition means (22D; 22S) are in correspondence with said mouth (19) of said extender (2E) for the passage of said fluid (F; F'; F"; F"') through said distributing disc (22, 22', 22").

19. A Wind Energy Converting System, according to claims 8 and 16, **characterized in that** said first distribution means comprise a distributing disc (22, 22', 22"), associated to said rotating shaft (7), located in said front wall (11P) of said capsule (11; 11') and said rotor (2), in particular said distributing disc (22, 22', 22") showing transition means (22D; 22S) so that in at least an angular position of said distributing disc (22, 22', 22") said transition means (22D; 22S) are in correspondence with said mouth (19) of said extender (2E) for the passage of said fluid (F; F'; F"; F"') through said distributing disc (22, 22', 22").

20. A Wind Energy Converting System, according to claim 18 or 19, **characterized in that** said transition means of said distributing disc (22, 22', 22 ") comprise at least a hole (22D) or an opening (22S).

21. A Wind Energy Converting System, according to the previous claim, **characterized in that** said at least one hole (22D) of said distributing disc (22, 22', 22") has a section substantially comparable with that of said mouth (19) of said extender (2E).

22. A Wind Energy Converting System, according to claim 18 or 19, **characterized in that** said transition means of said distributing disc comprise openings (22S) with a circular sector shape, asymmetrically distributed with respect to the center of said distributing disc (22, 22', 22 ").

23. A Wind Energy Converting System, according to claim 18 or 19, **characterized in that** said distributing disc (22, 22', 22") is associated to said rotating shaft (7) by means of sixth means adapted to generate a relative rotating motion between said distributing disc (22, 22', 22") and said rotating shaft (7), so as to vary the intermittence of the entry of said fluid (F; F'; F"; F"') into said mouth (19) of said extender (2E).

24. A Wind Energy Converting System, according to claims 11 and 16, **characterized in that** said second distribution means comprise a second distributing disc (23) movably associated inside said extender (2E) of said rotor (2) in vicinity of a root (5R) of said blade (5) of said rotor (2).

25. A Wind Energy Converting System, according to the previous claim, **characterized in that** said second distributing disc (23) is movably associated inside said extender (2E), in the sense of being adapted to rotate inside said extender (2E') for regulating the entry of said fluid (F; F'; F"; F"') inside said volumes (14, 15) defined inside said blades (5).

26. A Wind Energy Converting System, according to claim 24 or 25, **characterized in that** said second distributing disc (23) faces towards the passage sections of said volumes (14, 15), defined inside said blades (5) by baffles (21A, 21B) deviating the flow present in said root (5EII) of said blades (5).

27. A Wind Energy Converting System, according to the previous claim, **characterized in that** said second distributing disc (23) is shaped so as to show, in some of its angular sectors, passage windows (24) of a first series (24A) having an area substantially comparable with said passage section of said first volume (14), and passage windows of a second series (24B) having an area substantially comparable with said passage section of said second volume (15).

28. A Wind Energy Converting System, according to claim 6, **characterized in that** said fourth means for the circulation of said fluid (F; F'; F"; F"') inside said third means (11; 11') comprise fan and/or compressor means (25) associated to said third means (11; 11').

29. A Wind Energy Converting System, according claims 16 and 28, **characterized in that** said fan and/or compressor means comprise a fan and/or a compressor element (25) fixed on said rotating shaft (7).

30. A Wind Energy Converting System, according to anyof the previous claims, **characterized in that** said first means of said Wind Energy Converting System (1; 1'; 1"; 1"') comprise a transformer (TR) and/or other power or auxiliary electric devices located at the base of said tower (4') of said Wind Energy Converting System (1'), and said third means comprise openings at the base of said tower (4') in vicinity of said transformer (TR) and/or other power or auxiliary electric devices, said tower (4') further showing a connection of fluid between its inside and the accumulation volume (11') of said Wind Energy Converting System (1; 1'; 1"; 1"') for the passage of a fluid (F"') taken from the outside ambient into said accumulation volume (11').

31. A Wind Energy Converting System, according to any of the previous claims, **characterized in that** said external surface (5S) of said blades (5) is constituted by means of overlapping a multiplicity of previously shaped sheets (18) comprising said holes or openings (12).

32. A Wind Energy Converting System, according to the previous claim, **characterized in that** said external surface (5S) of said blades (5) is constituted by composite material.

33. A wind Energy Converting System, according to claim 31 or 32, **characterized in that** said external surface (5S) of said blades (5) comprises an upper semi-shell (5U) and a lower semi-shell (5L).

34. A Wind Energy Converting System, according to any of the previous claims from 2 to 4, **characterized in that** said first series (12L) of holes and/or said second series of holes (12T) comprise holes (12, Fig.4) of a first type (4a) and/or a second type (4b) and/or a third type (4c), said types being **characterized in** having holes (12):
- the first with constant section in the passage of the air from the internal surface (5Si) to the external one (5Se) of said surface (5S) of said blade (5),
- the second, divergent and with a substantially orthogonal axis with respect to the direction of the stream of said wind (V) external to said blade (5),
- the third, substantially parallel walls and an inclined axis, forming a determined acute angle with respect to the orthogonal axis to the external surface, with such an orientation that the out-flowing air is directed in the same sense of the stream of the wind (V) external to said blade (5).

35. A Wind Energy Converting System, according to the previous claim, **characterized in that** the said second series (12T) of holes (12) comprise holes (Fig.4, 12) of the said third type (4c).

36. A Wind Energy Converting System, according to any of the previous claims, **characterized in that** it comprises at least a dissipating device of the power taken from another power source external to said Wind Energy Converting System (1; 1'; 1"; 1"'), adapted to increase the enthalpy contents of said fluid (F; F'; F"; F"') circulating inside said de-icing and anti-icing arrangement.

37. A Wind Energy Converting System, according to any of the previous claims, **characterized in that** said nacelle (3) is movably associated to said tower (4) by the interposition of seventh means for the orientation of said nacelle (3) in the direction of the maximum wind (V) flow present in the place where said Wind Energy Converting System (1) is installed.

38. Method for preventing and eliminating the ice accretion on the rotor blades of a Wind Energy Converting Systems of a type comprising:
- a tower (4; 4'), adapted to support and fix said Wind Energy Converting System (1; 1'; 1"; 1"') to the ground or a basement,
- a nacelle (3), arranged on said tower (4; 4'), whereto first means (9, IN, 10; TR) for transforming the rotating motion of a rotor for producing electric power to be sent to an electric grid and for the management and the operation of possible electric operating devices of said Wind Energy Converting System (1) are associated;
- a rotor (2), associated to said nacelle (3) in such a way that it can rotate with respect to said nacelle (3), said rotor (2) comprising a determined number of blades (5) and susceptible of being put in motion by the effect of the wind (V) hitting said blades (5),
the method comprising the following steps:
a) to suck fluid (F; F'; F"; F"') or air from the external environment of said Wind Energy Converting System (1; 1'; 1"; 1"'),
b) to send said sucked fluid (F; F'; F"; F"') in second means (2E, 19,21) for the passage of said fluid (F; F'; F"; F"') inside volumes (14, 15) defined inside said blades (5) of said rotor (2),
c) to realize the ejection of at least a part of said fluid (F; F'; F"; F"') externally to said blades (5) through openings (12) present on at least a part of an external surface (5S) of the blades, said openings (12) being in connection of fluid with said volumes (14, 15) inside said blades (5),
**characterized in that** said ejection is implemented so as to create an air layer or film upon the blades (5) outside a blade surface (5E) concerned with said openings (12) by fluid thermodynamical interaction with said wind (V) hitting at least said blade surface (5E) concerned with said openings (12), and/or with water and ice possibly present on said external surface (5S) of said blade (5).

39. Method, according to the previous claim, **characterized in that** between the method steps a) and b) there is provided a thermal exchange between said fluid (F; F'; F"; F"') and the heated surfaces of first means (9, IN, 10; TR) of said Wind Energy Converting System (1; 1'; 1"; 1"') for transforming the rotating movement of a rotor (2) in order to generate electric power, through an accumulation volume constituted inside said Wind Energy Converting System.

## Patentansprüche

1. Windenergie-Konvertersystem zur elektrischen Stromerzeugung mit einer Enteisungs- und Eisverhinderungsanordnung, welches Windenergie-Konvertersystem (1; 1'; 1"; 1"')
- einen Turm (4; 4') aufweist, der zum Tragen und Befestigen des Windenergie-Konvertersystems (1; 1'; 1"; 1"') auf dem Erdboden oder einem Fundament ausgebildet ist,
- eine auf dem Turm (4; 4') angeordnete Gondel (3) aufweist, der erste Mittel (9, IN, 10; TR) zum Umwandeln der Rotationsbewegung eines Rotors (2) zugeordnet sind, um elektrischen Strom zur Einspeisung in ein elektrisches Netz und zum Betrieb möglicherweise vorhandener elektrischer Einrichtungen des Windenergie-Konvertersystems (1) zu erzeugen,
- wobei der Rotor (2) der Gondel (3) derart zugeordnet ist, dass er gegenüber der Gondel (3) gedreht werden kann, und der Rotor (2) eine Anzahl von Flügeln (5) hat und durch Auftreffen des Windes (V) auf die Flügel (5) in Drehung versetzt wird, wobei das Windenergie-Konvertersystem (1; 1'; 1"; 1"') interne zweite Mittel (2E, 19, 21) zum Durchströmen eines Fluids (F; F'; F"; F"') innerhalb von Volumina (14, 15) aufweist, die sich im Innern der Flügel (5) des Rotors (2) befinden, und wobei die Flügel (5) des Rotors (2) auf mindestens einem Teil ihrer äußeren Oberfläche (5S) Öffnungen (12) aufweisen, die in Verbindung mit dem Fluid der Volumina (14, 15) stehen,
**dadurch gekennzeichnet,**
**dass** die Öffnungen (12) dazu ausgebildet sind, durch fluid-thermodynamisches Zusammenwirken mit dem mindestens auf der zu den Öffnungen (12) gehörenden Flügeloberfläche (5E) auftreffenden Wind (V) und/oder mit Wasser und Eis auf der äußeren Oberfläche (5S) der Flügel (5) eine Luftschicht oder einen Luftfilm auf den Flügeln (5) außerhalb der zu den Öffnungen (12) gehörenden Flügeloberfläche (5E) zu erzeugen.

2. Windenergie-Konvertersystem nach Anspruch 1, **dadurch gekennzeichnet, dass** die Öffnungen (12) eine erste Serie (12L) von Löchern enthalten, die in Verbindung mit dem Fluid eines ersten Volumens (14) der Volumina (14, 15) innerhalb der Flügel (5) stehen, und dass die erste Serie (12L) von Löchern etwa in der Nähe der Vorderkante der Profile (5P) liegt, die jeden der Flügel (5) des Rotors (2) bilden.

3. Windenergie-Konvertersystem nach dem vorhergehenden Anspruch, **dadurch gekennzeichnet, dass** die Öffnungen eine zweite Serie (12T) von Löchern (12) enthalten, die in Verbindung mit dem Fluid eines zweiten Volumens (15) der Volumina (14, 15) innerhalb der Flügel (5) stehen, und dass die zweite Serie (12T) von Löchern (12) etwa in der Nähe der Hinterkante der Profile (5P) liegt, die jeden der Flügel (5) des Rotors (2) bilden.

4. Windenergie-Konvertersystem nach Anspruch 2 oder 3, **dadurch gekennzeichnet, dass** die Öffnungen (12), die in Verbindung mit dem Fluid der Volumina (14, 15) innerhalb der Flügel (5) stehen, vorzugsweise im Spitzenbereich jedes der Flügel (5) des Rotors (2) angeordnet sind.

5. Windenergie-Konvertersystem nach einem oder mehreren der vorhergehenden Ansprüche, **dadurch gekennzeichnet, dass** die Gondel (3) im Innern den ersten Mitteln (9, IN,10; TR) zugeordnete dritte Mittel (11; 11') aufweist, die dazu ausgebildet sind, ein Speichervolumen für das Fluid (F; F'; F"; F"') zu bilden zwecks Verbesserung des Wärmeaustausches zwischen dem Fluid (F; F'; F"; F"') und den beheizten Oberflächen der ersten Mittel (9, IN,10; TR) des Windenergie-Konvertersystems (1; 1'; 1"; 1"').

6. Windenergie-Konvertersystem nach dem vorhergehenden Anspruch, **dadurch gekennzeichnet, dass** vierte Mittel (11A, 11L, 3A; 25) vorgesehen sind für die Zirkulation des Fluids (F; F'; F"; F"') innerhalb der dritten Mittel (11; 11').

7. Windenergie-Konvertersystem nach dem vorhergehenden Anspruch, **dadurch gekennzeichnet, dass** erste Verteilermittel (22, 22', 22") vorgesehen sind, die den zweiten Mitteln (2E, 19, 21) des Windenergie-Konvertersystems (1; 1'; 1"; 1"') zugeordnet sind für die Passage des Fluids (F; F'; F"; F"') innerhalb der in den Flügeln (5) definierten Volumina (14, 15) und zu den dritten Mitteln (11; 11'), die dazu ausgebildet sind, das Speichervolumen für das Fluid (F; F'; F"; F"') zu bilden, und dass die ersten Verteilermittel (22, 22', 22") durch ihre Zuordnungen dazu ausgebildet sind, einen intermittierenden Strom des Fluids (F; F'; F"; F"') zu erzeugen, der von den dritten Mitteln (11; 11') innerhalb der zweiten Mittel (2E, 19, 21) durch die vierten Mittel (11A, 11L, 3A; 25) des Windenergie-Konvertersystems (1) strömt.

8. Windenergie-Konvertersystem nach dem vorhergehenden Anspruch, **dadurch gekennzeichnet, dass** die ersten Verteilermittel (22, 22', 22") zwischen den dritten Mitteln (11; 11') und den zweiten Mitteln (2E, 19, 21) des Windenergie-Konvertersystems (1) angeordnet sind.

9. Windenergie-Konvertersystem nach Anspruch 7 oder 8, **dadurch gekennzeichnet, dass** die ersten Verteilermittel (22, 22', 22") dazu ausgebildet sind, den Intermittenzwert des intermittierenden Durchströmens des Fluids (F; F'; F"; F"') zu variieren.

10. Windenergie-Konvertersystem nach einem oder mehreren der vorhergehenden Ansprüche, **dadurch gekennzeichnet, dass** innerhalb des Rotors (2) zweite Verteilermittel (2E', 23) vorgesehen und dazu ausgebildet sind, den Eintritt des Fluids (F; F'; F"; F"') in die in den Flügeln (5) definierten Volumina (14, 15) wahlweise zu steuern.

11. Windenergie-Konvertersystem nach dem vorhergehenden Anspruch, **dadurch gekennzeichnet, dass** die zweiten Verteilermittel (2E', 23) dazu ausgebildet sind, den Eintritt des Fluids (F; F'; F"; F"') in das erste Volumen (14) und/oder das zweite Volumen (15) oder in keines der Volumina (14, 15) des Windenergie-Konvertersystems (1) wahlweise zuzulassen.

12. Windenergie-Konvertersystem nach Anspruch 5, **dadurch gekennzeichnet, dass** die dritten Mittel (11; 11') eine Kapsel (11; 11') aufweisen, die der Gondel (3) beweglich zugeordnet ist.

13. Windenergie-Konvertersystem nach dem vorhergehenden Anspruch, **dadurch gekennzeichnet, dass** die Kapsel (11; 11') in ihrer äußeren Umhüllung aus einem Material mit niedriger Wärmeleitfähigkeit besteht.

14. Windenergie-Konvertersystem nach Anspruch 12 oder 13, **dadurch gekennzeichnet, dass** in Verbindung mit den ersten Mitteln (9, IN, 10; TR) zum Umwandeln der Rotationsbewegung eines Rotors in elektrischen Strom zur Einspeisung in ein elektrisches Netz und zum Betrieb möglicherweise vorhandener elektrischer Einrichtungen des Windenergie-Konvertersystems (1) die Kapsel (11; 11') innen mindestens teilweise mit einem wärmeleitfähigem Material beschichtet ist, um eine thermische Brücke zum Beheizen des Fluids (F; F'; F"; F"') zu bilden, das innerhalb der Kapsel (11, 11') zirkuliert.

15. Windenergie-Konvertersystem nach den Ansprüchen 6 und 12, **dadurch gekennzeichnet, dass** die vierten Mittel für die Zirkulation des Fluids (F; F'; F"; F"') innerhalb der dritten Mittel (11; 11') mindestens ein Fenster (11L) in der Vorderwand (11P) der Kapsel (11, 11') und mindestens eine im hinteren Bereich der Kapsel (11, 11') geformte Öffnung (11A) sowie eine oder mehrere Öffnungen (3A) im hinteren Teil der Gondel (3) enthalten.

16. Windenergie-Konvertersystem nach einem oder mehreren der vorhergehenden Ansprüche, **dadurch gekennzeichnet, dass** der Rotor eine Nabe (2F) aufweist, die einer Drehwelle (7) des Windenergie-Konvertersystems (1; 1'; 1"; 1"') fest zugeordnet werden kann, dass die Drehwelle (7) wiederum fest mit den ersten Mitteln (9, IN, 10; TR) zum Umwandeln der Bewegung des Rotors in elektrischen Strom zur Einspeisung in ein elektrisches Netz verbunden ist und dass ein Anschlussstück (2E; 2E') für jeden der Flügel (5) des Rotors (2) vorgesehen ist, das auf der einen Seite fest mit der Nabe (2F) und auf der anderen Seite mit einer Wurzel (5EII) des Flügels (5) verbunden ist.

17. Windenergie-Konvertersystem nach den Ansprüchen 12 und 16, **dadurch gekennzeichnet, dass** die zweiten Mittel ein Anschlussstück (2E) mit mindestens einer Mündung (19) aufweisen, die in Richtung mindestens eines Fensters (11L) der Kapsel (11) zeigt, sowie Umlenkplatten (21) zum Ablenken des in dem Anschlussstück (2E) und in der Wurzel (5EII) des Flügels (5) vorhandenen Stromes.

18. Windenergie-Konvertersystem nach den Ansprüchen 8 und 16, **dadurch gekennzeichnet, dass** die ersten Verteilermittel eine Verteilerscheibe (22, 22', 22") aufweisen, die der Drehwelle (7) zugeordnet und zwischen der Vorderwand (11P) der Kapsel (11; 11') und dem Rotor (2) angeordnet ist, dass insbesondere die Verteilerscheibe (22, 22', 22") Übergangsmittel (22D, 22S) zeigt, so dass in mindestens einer Winkelposition der Verteilerscheibe (22, 22', 22") die Übergangsmittel (22D, 22S) für die Passage des Fluids (F; F'; F"; F"') durch die Verteilerscheibe (22, 22', 22") mit der Mündung (19) des Anschlussstückes (2E) ausgerichtet sind.

19. Windenergie-Konvertersystem nach den Ansprüchen 8 und 16, **dadurch gekennzeichnet, dass** die ersten Verteilermittel eine Verteilerscheibe (22, 22', 22") aufweisen, die der Drehwelle (7) zugeordnet und in der Vorderwand (11 P) der Kapsel (11; 11') und dem Rotor (2) angeordnet ist, dass insbesondere die Verteilerscheibe (22, 22', 22") Übergangsmittel (22D, 22S) zeigt, so dass in mindestens einer Winkelposition der Verteilerscheibe (22, 22', 22") die Übergangsmittel (22D, 22S) für die Passage des Fluids (F; F'; F"; F"') durch die Verteilerscheibe (22, 22', 22") mit der Mündung (19) des Anschlussstückes (2E) ausgerichtet sind.

20. Windenergie-Konvertersystem nach Anspruch 18 oder 19, **dadurch gekennzeichnet, dass** die Übergangsmittel der Verteilerscheibe (22, 22', 22") mindestens ein Loch (22D) oder eine Öffnung (22S) aufweisen.

21. Windenergie-Konvertersystem nach dem vorhergehenden Anspruch, **dadurch gekennzeichnet, dass** das mindestens eine Loch (22D) der Verteilerscheibe (22, 22', 22") einen im wesentlichen mit der Mündung (19) des Anschlussstückes (2E) vergleichbaren Bereich aufweist.

22. Windenergie-Konvertersystem nach Anspruch 18 oder 19, **dadurch gekennzeichnet, dass** die Übergangsmittel der Verteilerscheibe (22, 22', 22") Öffnungen (22S) mit Kreissektorform aufweisen, die gegenüber dem Mittelpunkt der Verteilerscheibe (22, 22', 22") asymmetrisch verteilt sind.

23. Windenergie-Konvertersystem nach Anspruch 18 oder 19, **dadurch gekennzeichnet, dass** die Verteilerscheibe (22, 22', 22") der Drehwelle (7) durch sechste Mittel zugeordnet ist, die dazu ausgebildet sind, eine relative Drehbewegung zwischen der Verteilerscheibe (22, 22', 22") und der Drehwelle (7) zu erzeugen, um hierdurch die Intermittenz des Eintretens des Fluids (F; F'; F"; F"') in die Mündung (19) des Anschlussstückes (2E) zu variieren.

24. Windenergie-Konvertersystem nach den Ansprüchen 11 und 16, **dadurch gekennzeichnet, dass** die zweiten Verteilermittel eine zweite Verteilerscheibe (23) aufweisen, die innerhalb des Anschlussstückes (2E) des Rotors (2) in der Nähe einer Wurzel (5R) des Flügels (5) des Rotors (2) beweglich zugeordnet ist.

25. Windenergie-Konvertersystem nach dem vorhergehenden Anspruch, **dadurch gekennzeichnet, dass** die zweite Verteilerscheibe (23) innerhalb des Anschlussstückes (2E) beweglich zugeordnet ist, in dem Sinne, dass sie sich innerhalb des Anschlussstückes (2E') drehen kann, um den Eintritt des Fluids (F; F'; F"; F"') innerhalb der in den Flügeln (5) definierten Volumina (14, 15) zu regeln.

26. Windenergie-Konvertersystem nach Anspruch 24 oder 25, **dadurch gekennzeichnet, dass** die zweite Verteilerscheibe (23) in Richtung auf die Passageabschnitte der Volumina (14, 15) zeigt, die in den Flügeln (5) durch Umlenkplatten (21A,21B) definiert sind, die die in der Wurzel (5EII) der Flügel (5) vorhandene Strömung ablenken.

27. Windenergie-Konvertersystem nach dem vorhergehenden Anspruch, **dadurch gekennzeichnet, dass** die zweite Verteilerscheibe (23) so geformt ist, dass sie in einigen ihrer Winkelsektoren Passagefenster (24) einer ersten Serie (24A) zeigt, die einen Bereich haben, der im wesentlichen vergleichbar mit dem Passagebereich des ersten Volumens (14) ist, und Passagefenster einer zweiten Serie (24B) zeigt, die einen Bereich haben, der im wesentlichen vergleichbar mit dem Passagebereich des zweiten Volumens (15) ist.

28. Windenergie-Konvertersystem nach Anspruch 6, **dadurch gekennzeichnet, dass** die vierten Mittel zur Zirkulation des Fluids (F; F'; F"; F"') innerhalb der dritten Mittel (11, 11') eine Lüfter- und/oder Kompressoranordnung (25) aufweisen, die den dritten Mitteln (11, 11') zugeordnet ist.

29. Windenergie-Konvertersystem nach den Ansprüchen 16 und 28, **dadurch gekennzeichnet, dass** die Lüfter- und/oder Kompressoranordnung ein Lüfter- oder Kompressorelement (25) aufweist, das auf der Drehwelle (7) befestigt ist.

30. Windenergie-Konvertersystem nach einem oder mehreren der vorhergehenden Ansprüche, **dadurch gekennzeichnet, dass** die ersten Mittel des Windenergie-Konvertersystems (1; 1'; 1"; 1"') einen Transformator (TR) und/oder andere Leistungs- oder Hilfselektrikeinrichtungen enthalten, die an der Basis des Turms (4') des Windenergie-Konvertersystems (1') angeordnet sind, und dass die dritten Mittel Öffnungen an der Basis des Turms (4') in der Nähe des Transformators (TR) und/oder der anderen Leistungs- oder Hilfselektrikeinrichtungen aufweisen, dass der Turm (4') außerdem eine Fluidverbindung zwischen seiner Innenseite und dem Speichervolumen (11') des Windenergie-Konvertersystems (1; 1'; 1"; 1"') für die Passage von Fluid (F"') von der äußeren Umgebung zu dem Speichervolumen (11') aufweist.

31. Windenergie-Konvertersystem nach einem oder mehreren der vorhergehenden Ansprüche, **dadurch gekennzeichnet, dass** die äußere Oberfläche (5S) der Flügel (5) aus der Überlappung einer Mehrzahl von vorgeformten Schichten (18) besteht, die die Löcher oder Öffnungen (12) enthalten.

32. Windenergie-Konvertersystem nach dem vorhergehenden Anspruch, **dadurch gekennzeichnet, dass** die äußere Oberfläche (5S) der Flügel (5) aus Verbundmaterial besteht.

33. Windenergie-Konvertersystem nach Anspruch 31 oder 32, **dadurch gekennzeichnet, dass** die äußere Oberfläche (5S) der Flügel (5) aus einer oberen Halbschale (5U) und einer unteren Halbschale (5L) besteht.

34. Windenergie-Konvertersystem nach einem oder mehreren der Ansprüche 2 bis 4, **dadurch gekennzeichnet, dass** die erste Serie (12L) von Löchern und/oder die zweite Serie von Löchern (12T) Löcher (12, Fig. 4) einer ersten Art (4a) und/oder einer zweiten Art (4b) und/oder einer dritten Art (4c) enthält und dass diese Arten durch das Vorhandensein von folgenden Löchern **gekennzeichnet** sind:
- einer ersten Art mit konstantem Querschnitt in der Luftpassage von der inneren Oberfläche (5Si) zu der äußeren Oberfläche (5Se) der Oberfläche des Flügels (5),
- einer zweiten Art, divergierend mit etwa orthogonaler Achse gegenüber der Richtung des Windstromes (V) außerhalb des Flügels (5),
- einer dritten Art mit etwa parallelen Wänden und geneigter Achse, einen bestimmten spitzen Winkel gegenüber der orthogonalen Achse zu der äußeren Oberfläche bildend, mit einer solchen Richtung, dass die heraus strömende Luft in gleicher Weise gerichtet ist wie der Windstrom (V) zu dem Flügel (5).

35. Windenergie-Konvertersystem nach dem vorhergehenden Anspruch, **dadurch gekennzeichnet, dass** die zweite Serie (12T) von Löchern (12) Löcher (Fig.4, 12) der dritten Art (4c) enthält.

36. Windenergie-Konvertersystem nach einem oder mehreren der vorhergehenden Ansprüche, **dadurch gekennzeichnet, dass** es mindestens eine Verbrauchseinrichtung für Leistung enthält, die von einer anderen Leistungsquelle außerhalb des Windenergie-Konvertersystems (1; 1'; 1"; 1"') stammt, und die dazu ausgebildet ist, den Enthalpie-Inhalt des innerhalb der Enteisungs- und Eisverhinderungsanordnung zirkulierenden Fluids (F; F'; F"; F"') zu erhöhen.

37. Windenergie-Konvertersystem nach einem oder mehreren der vorhergehenden Ansprüche, **dadurch gekennzeichnet, dass** die Gondel (3) dem Turm (4) durch Einfügen von siebten Mitteln beweglich zugeordnet ist, die die Gondel (3) in Richtung des maximalen Windes (V) ausrichten, der am Installationsort des Windenergie-Konvertersystems (1) vorhanden ist.

38. Verfahren zum Verhindern und Entfernen der Eisbildung auf den Rotorflügeln eines Windenergie-Konvertersystems der folgenden Art:
- mit einem Turm (4; 4'), der zum Tragen und Befestigen des Windenergie-Konvertersystems (1; 1'; 1"; 1'") auf dem Erdboden oder einem Fundament ausgebildet ist,
- mit einer auf dem Turm (4; 4') angeordneten Gondel (3), der erste Mittel (9, IN, 10; TR) zum Umwandeln der Rotationsbewegung eines Rotors zugeordnet sind, um elektrischen Strom zur Einspeisung in ein elektrisches Netz und zum Betrieb möglicherweise vorhandener elektrischer Einrichtungen des Windenergie-Konvertersystems (1) zu erzeugen,
- mit einem Rotor (2), der der Gondel (3) derart zugeordnet ist, dass er gegenüber der Gondel (3) gedreht werden kann, und der Rotor (2) eine bestimmte Anzahl von Flügeln (5) hat und durch Auftreffen des Windes (V) auf die Flügel (5) in Drehung versetzt wird,
- wobei das Verfahren folgende Schritte aufweist:
a) Ansaugen von Fluid (F; F'; F"; F"') oder Luft aus der äußeren Umgebung des Windenergie-Konvertersystems (1; 1'; 1"; 1"'),
b) Aussenden des angesaugten Fluids (F; F'; F"; F"') in zweite Mittel (2E, 19, 21) für die Passage des Fluids (F; F'; F"; F"') innerhalb von Volumina (14, 15), die in den Flügeln (5) des Rotors (2) definiert sind,
c) Durchführung des Ausspritzens mindestens eines Teils des Fluids (F; F'; F"; F"') auf die Flügel (5) durch Öffnungen (12), die in mindestens einem Teil der äußeren Oberfläche (5S) der Flügel vorhanden sind, wobei die Öffnungen (12) in Fluidverbindung mit den Volumina (14, 15) in den Flügeln (5) stehen,
**dadurch gekennzeichnet, dass**
das Ausspritzen erfolgt, um durch fluid-thermodynamisches Zusammenwirken mit dem mindestens auf die zu den Öffnungen (12) gehörende Flügeloberfläche (5E) auftreffenden Wind (V) und/oder mit Wasser und Eis auf der äußeren Oberfläche (5S) der Flügel (5) eine Luftschicht oder einen Luftfilm auf den Flügeln (5) außerhalb der zu den Öffnungen (12) gehörenden Flügeloberfläche (5E) zu erzeugen.

39. Verfahren nach dem vorhergehenden Anspruch, **dadurch gekennzeichnet, dass** zwischen den Verfahrensschritten a) und b) ein Wärmeaustausch mittels eines in dem Windenergie-Konvertersystem angeordneten Speichervolumens erfolgt zwischen dem Fluid (F; F'; F"; F"') und den beheizten Oberflächen der ersten Mittel (9, IN, 10; TR) des Windenergie-Konvertersystems (1; 1'; 1"; 1'") zum Umwandeln der Rotationsbewegung eines Rotors (2) zum Erzeugen von elektrischem Strom.

## Revendications

1. Système de conversion de l'énergie éolienne ayant pour but de produire du courant électrique, comprenant un agencement de dégivrage et d'anti-givrage, ledit système de conversion de l'énergie éolienne (1 ; 1' ; 1" ; 1"') étant d'un type comprenant :
une tour (4 ; 4') adaptée pour supporter et fixer ledit système de conversion de l'énergie éolienne (1; 1'; 1" ; 1"') au sol ou sur une fondation,
une nacelle (3) située sur ladite tour (4 ; 4'), à laquelle des premiers moyens (9, IN, 10 ; TR) pour transformer le mouvement rotatif d'un rotor (2) afin de générer du courant électrique destiné à être introduit dans un réseau électrique et pour la gestion et le fonctionnement des dispositifs électriques possibles desdits systèmes de conversion de l'énergie éolienne (1) sont associés ;
le rotor (2), associé à ladite nacelle (3) de sorte qu'il peut être entraîné en rotation par rapport à ladite nacelle (3), ledit rotor (2) comprenant un certain nombre d'aubes (5) et étant susceptible de tourner lorsque le vent (V) vient heurter lesdites aubes (5), ledit système de conversion de l'énergie éolienne (1 ; 1' ; 1" ; 1"') comprenant de manière interne des seconds moyens (2E, 19, 21) pour l'écoulement d'un fluide (F ; F' ; F" ; F"') à l'intérieur de volumes (14, 15) définis dans l'intérieur desdites aubes (5) dudit rotor (2), les aubes (5) du rotor (2) comprenant, sur au moins une partie d'une surface interne (5S) desdites aubes (5), des ouvertures (12) en liaison avec le fluide desdits volumes (14, 15),
**caractérisé en ce que** lesdites ouvertures (12) sont adaptées pour créer une couche ou film d'air sur les aubes (5) à l'extérieur d'une surface d'aube (5E) dotée desdites ouvertures (12), par interaction fluide-thermodynamique avec ledit vent (V) qui vient heurter au moins ladite surface d'aube (5E) dotée desdites ouvertures (12), et/ou avec de l'eau et de la glace présentes sur ladite surface externe (5S) de ladite aube (5).

2. Système de conversion de l'énergie éolienne selon la revendication 1, **caractérisé en ce que** lesdites ouvertures (12) comprennent une première série (12L) de trous en liaison avec le fluide d'un premier (14) desdits volumes (14, 15) à l'intérieur desdites aubes (5), ladite première série (12L) de trous étant située sensiblement à proximité du bord d'attaque des profils (5P) qui constituent chacune des aubes (5) dudit rotor (2).

3. Système de conversion de l'énergie éolienne selon la revendication précédente, **caractérisé en ce que** lesdites ouvertures comprennent une seconde série (12T) de trous (12) en liaison avec le fluide d'un second (15) desdits volumes (14, 15) à l'intérieur desdites aubes (5), ladite seconde série (12T) de trous (12) étant située sensiblement à proximité du bord de fuite des profils (5P) constituant chacune des aubes (5) dudit rotor (2).

4. Système de conversion de l'énergie éolienne selon la revendication 2 ou 3, **caractérisé en ce que** lesdites ouvertures (12) en liaison avec le fluide desdits volumes (14, 15) à l'intérieur desdites aubes (5) sont de préférence situées sur la partie de pointe de chacune des aubes (5) dudit rotor (2).

5. Système de conversion de l'énergie éolienne selon l'une quelconque des revendications précédentes, **caractérisé en ce que** ladite nacelle (3) comprend à l'intérieur des troisièmes moyens (11 ; 11') associés auxdits premiers moyens (9, IN, 10 ; TR) adaptés pour constituer un volume d'accumulation pour ledit fluide (F ; F' ; F" ; F"') pour faciliter l'échange thermique entre ledit fluide (F ; F' ; F" ; F"') et les surfaces chauffées desdits premiers moyens (9, IN, 10 ; TR) dudit système de conversion de l'énergie éolienne (1 ; 1' ; 1";1''').

6. Système de conversion de l'énergie éolienne selon la revendication précédente, **caractérisé en ce qu'**il comprend des quatrièmes moyens (11A, 11L, 3A; 25) pour la circulation dudit fluide (F ; F' ; F" ; F"') à l'intérieur desdits troisièmes moyens (11 ; 11').

7. Système de conversion de l'énergie éolienne selon la revendication précédente, **caractérisé en ce qu'**il comprend des premiers moyens de distribution (22, 22', 22") associés auxdits seconds moyens (2E, 19, 21) dudit système de conversion de l'énergie éolienne (1 ; 1' ; 1" ; 1"') pour le passage dudit fluide (F ; F' ; F" ; F"') à l'intérieur desdits volumes (14, 15) définis à l'intérieur desdites aubes (5), et auxdits troisièmes moyens (11 ; 11') adaptés pour constituer ledit volume d'accumulation pour ledit fluide (F ; F' ; F" ; F"'), lesdits premiers moyens de distribution (22, 22', 22") étant adaptés au moyen desdites associations pour générer un écoulement intermittent dudit fluide (F ; F' ; F" ; F"') allant desdits troisièmes moyens (11 ; 11') à l'intérieur desdits seconds moyens (2E, 19, 21) en passant par lesdits quatrièmes moyens (11A, 11L, 3A ; 25) dudit système de conversion de l'énergie éolienne (1).

8. Système de conversion de l'énergie éolienne selon la revendication précédente, **caractérisé en ce que** lesdits premiers moyens de distribution (22, 22', 22") sont situés entre lesdits troisièmes moyens (11 ; 11') et lesdits seconds moyens (2E, 19, 21) dudit système de conversion de l'énergie éolienne (1).

9. Système de conversion de l'énergie éolienne selon la revendication 7 ou 8, **caractérisé en ce que** lesdits premiers moyens de distribution (22, 22', 22") sont d'un type adapté pour modifier la valeur d'intermittence dudit écoulement intermittent dudit fluide (F ; F' ; F" ; F"').

10. Système de conversion de l'énergie éolienne selon l'une quelconque des revendications précédentes, **caractérisé en ce que** lesdits seconds moyens de distribution (2E', 23) sont prévus dans ledit rotor (2) et sont adaptés pour commander sélectivement l'entrée dudit fluide (F ; F' ; F" ; F"') dans lesdits volumes (14, 15) définis à l'intérieur desdites aubes (5).

11. Système de conversion de l'énergie éolienne selon la revendication précédente, **caractérisé en ce que** lesdits seconds moyens de distribution (2E', 23) sont d'un type adapté pour permettre sélectivement l'entrée dudit fluide (F ; F' ; F" ; F"') dans ledit premier volume (14) et/ou ledit second volume (15) ou dans aucun desdits volumes (14, 15) dudit système de conversion de l'énergie éolienne (1).

12. Système de conversion de l'énergie éolienne selon la revendication 5, **caractérisé en ce que** lesdits troisièmes moyens (11 ; 11') comprennent une capsule (11, 11') associée de manière mobile à ladite nacelle (3).

13. Système de conversion de l'énergie éolienne selon la revendication précédente, **caractérisé en ce que** ladite capsule (11, 11') est, dans son enveloppe externe, sensiblement réalisée avec un matériau ayant une faible conductivité thermique.

14. Système de conversion de l'énergie éolienne selon les revendications 12 ou 13, **caractérisé en ce que** ladite capsule (11, 11') est au moins en partie recouverte à l'intérieur avec un matériau thermiquement conducteur en liaison avec lesdits premiers moyens (9, IN, 10 ; TR) pour transformer le mouvement de rotation d'un rotor en courant électrique destiné à être envoyé à un réseau électrique et pour la gestion et le fonctionnement d'éventuels dispositifs électriques dudit système de conversion de l'énergie éolienne (1), afin de constituer un pont thermique pour la chaleur dudit fluide (F ; F' ; F" ; F"') circulant à l'intérieur de ladite capsule (11, 11').

15. Système de conversion de l'énergie éolienne selon les revendications 6 et 12, **caractérisé en ce que** lesdits quatrièmes moyens pour la circulation dudit fluide (F ; F' ; F" ; F"') à l'intérieur desdits troisièmes moyens (11 ; 11') comprennent au moins une fenêtre (1 IL) dans la paroi avant (11P) de ladite capsule (11, 11') et au moins une ouverture (11A) formée sur l'arrière de ladite capsule (11, 11') ainsi qu'une ou plusieurs ouvertures (3A) situées dans la partie arrière de ladite nacelle (3).

16. Système de conversion de l'énergie éolienne selon l'une quelconque des revendications précédentes, **caractérisé en ce que** ledit rotor comprend un moyeu (2F), qui peut être associé de manière rigide à un arbre de rotation (7) dudit système de conversion de l'énergie éolienne (1 ; 1' ; 1" ; 1"'), ledit arbre rotatif (7) étant à son tour rigidement raccordé auxdits premiers moyens (9, IN, 10 ; TR) pour transformer le mouvement rotatif d'un rotor en courant électrique destiné à être envoyé à un réseau électrique, un extenseur (2E ; 2E') pour chacune desdites aubes (5) dudit rotor (2) rigidement raccordé sur un côté audit moyeu (2F) et de l'autre côté à une emplanture (5EII) de ladite aube (5).

17. Système de conversion de l'énergie éolienne selon les revendications 12 et 16, **caractérisé en ce que** lesdits seconds moyens comprennent un extenseur (2E) ayant au moins une bouche (19) orientée vers au moins une fenêtre (11L) de ladite capsule (11), ainsi que des déflecteurs (21) pour dévier l'écoulement présent à la fois dans ledit extenseur (2E) et dans ladite emplanture (5EII) de ladite aube (5).

18. Système de conversion de l'énergie éolienne selon les revendications 8 et 16, **caractérisé en ce que** lesdits premiers moyens de distribution comprennent un disque de distribution (22, 22', 22") associé audit arbre rotatif (7), situé entre ladite paroi avant (11P) de ladite capsule (11 ; 11') et ledit rotor (2), en particulier ledit disque de distribution (22, 22', 22") présentant des moyens de transition (22D ; 22S) de sorte que dans au moins une position angulaire dudit disque de distribution (22, 22', 22"), lesdits moyens de transition (22D ; 22S) sont en correspondance avec ladite bouche (19) dudit extenseur (2E) pour le passage dudit fluide (F ; F' ; F" ; F"') par ledit disque de distribution (22, 22', 22").

19. Système de conversion de l'énergie éolienne selon les revendications 8 et 16, **caractérisé en ce que** lesdits premiers moyens de distribution comprennent un disque de distribution (22, 22', 22") associé audit arbre rotatif (7), situé dans ladite paroi avant (11P) de ladite capsule (11 ; 11') et ledit rotor (2), en particulier ledit disque de distribution (22, 22', 22") présentant des moyens de transition (22D ; 22S) de sorte que dans au moins une position angulaire dudit disque de distribution (22, 22', 22") lesdits moyens de transition (22D ; 22S) sont en correspondance avec ladite bouche (19) dudit extenseur (2E) pour le passage dudit fluide (F ; F' ; F" ; F"') à travers ledit disque de distribution (22, 22', 22").

20. Système de conversion de l'énergie éolienne selon la revendication 18 ou 19, **caractérisé en ce que** lesdits moyens de transition dudit disque de distribution (22, 22', 22") comprennent au moins un trou (22D) ou une ouverture (22S).

21. Système de conversion de l'énergie éolienne selon la revendication précédente, **caractérisé en ce que** ledit au moins un trou (22D) dudit disque de distribution (22, 22', 22") a une section sensiblement comparable à celle de ladite bouche (19) dudit extenseur (2E).

22. Système de conversion de l'énergie éolienne selon la revendication 18 ou 19, **caractérisé en ce que** lesdits moyens de transition dudit disque de distribution comprennent des ouvertures (22S) avec une forme de secteur circulaire, réparties asymétriquement par rapport au centre dudit disque de distribution (22, 22', 22").

23. Système de conversion de l'énergie éolienne selon la revendication 18 ou 19, **caractérisé en ce que** ledit disque de distribution (22, 22', 22") est associé audit arbre rotatif (7) au moyen de sixièmes moyens adaptés pour générer un mouvement rotatif relatif entre ledit disque de distribution (22, 22', 22") et ledit arbre rotatif (7), afin de modifier l'intermittence de l'entrée dudit fluide (F ; F' ; F" ; F"') dans ladite bouche (19) dudit extenseur (2E).

24. Système de conversion de l'énergie éolienne selon les revendications 11 et 16, **caractérisé en ce que** lesdits seconds moyens de distribution comprennent un second disque de distribution (23) associé de manière mobile à l'intérieur dudit extenseur (2E) dudit rotor (2) à proximité d'une emplanture (5F) de ladite aube (5) dudit rotor (2).

25. Système de conversion de l'énergie éolienne selon la revendication précédente, **caractérisé en ce que** ledit second disque de distribution (23) est associé de manière mobile à l'intérieur dudit extenseur (2E), dans le sens où il est adapté pour tourner à l'intérieur dudit extenseur (2E') pour réguler l'entrée dudit fluide (F ; F' ; F" ; F"') à l'intérieur desdits volumes (14, 15) définis à l'intérieur desdites aubes (5).

26. Système de conversion de l'énergie éolienne selon la revendication 24 ou 25, **caractérisé en ce que** ledit second disque de distribution (23) est orienté vers les sections de passage desdits volumes (14, 15) définis à l'intérieur desdites aubes (5) par des déflecteurs (21A, 21B) déviant l'écoulement présent dans ladite emplanture (5EII) desdites aubes (5).

27. Système de conversion de l'énergie éolienne selon la revendication précédente, **caractérisé en ce que** ledit second disque de distribution (23) est formé afin de présenter dans certains des secteurs angulaires des fenêtres de passage (24) d'une première série (24A) ayant une surface sensiblement comparable à ladite section de passage dudit premier volume (14), et des fenêtres de passage d'une seconde série (24_{B}) ayant une surface sensiblement comparable à ladite section de passage dudit second volume (15).

28. Système de conversion de l'énergie éolienne selon la revendication 6, **caractérisé en ce que** lesdits quatrièmes moyens pour la circulation dudit fluide (F ; F' ; F" ; F"') à l'intérieur desdits troisièmes moyens (11 ; 11') comprennent des moyens de ventilateur et/ou compresseur (25) associés auxdits troisièmes moyens (11 ; 11').

29. Système de conversion de l'énergie éolienne selon les revendications 16 et 28, **caractérisé en ce que** lesdits moyens de ventilateur et/ou compresseur comprennent un élément de ventilateur et/ou compresseur (25) fixé sur ledit arbre rotatif (7).

30. Système de conversion de l'énergie éolienne selon l'une quelconque des revendications précédentes, **caractérisé en ce que** lesdits premiers moyens dudit système de conversion de l'énergie éolienne (1 ; 1'; 1" ; 1"') comprennent un transformateur (TR) et/ou d'autres dispositifs motorisés ou électriques auxiliaires situés à la base de ladite tour (4') dudit système de conversion de l'énergie éolienne (1'), et lesdits troisièmes moyens comprennent des ouvertures à la base de ladite tour (4') à proximité dudit transformateur (TR) et/ou d'autres dispositifs motorisés ou électriques auxiliaires, ladite tour (4') présentant en outre un raccordement de fluide entre son intérieur et le volume d'accumulation (11') dudit système de conversion de l'énergie éolienne (1 ; 1' ; 1" ; 1"') pour le passage d'un fluide (F"') prélevé de l'air ambiant externe dans ledit volume d'accumulation (11').

31. Système de conversion de l'énergie éolienne selon l'une quelconque des revendications précédentes, **caractérisé en ce que** ladite surface externe (5S) desdites aubes (5) est constituée au moyen du chevauchement de plusieurs feuilles (18) formées préalablement comprenant lesdits trous ou ouvertures (12).

32. Système de conversion de l'énergie éolienne selon la revendication précédente, **caractérisé en ce que** ladite surface externe (5S) desdites aubes (5) est constituée par un matériau composite.

33. Système de conversion de l'énergie éolienne selon la revendication 31 ou 32, **caractérisé en ce que** ladite surface externe (5S) desdites aubes (5) comprend une demi-coque supérieure (5U) et une demi-coque inférieure (5L).

34. Système de conversion de l'énergie éolienne selon l'une quelconque des revendications précédentes 2 à 4, **caractérisé en ce que** ladite première série (12L) de trous et/ou ladite seconde série de trous (12T) comprennent des trous (12, figure 4) d'un premier type (4a) et/ou d'un second type (4b) et/ou d'un troisième type (4c), lesdits types étant **caractérisés en** ayant des trous (12) :
le premier avec une section constante dans le passage de l'air de la surface interne (5Si) jusqu'à la surface externe (5Se) de ladite surface (5S) de ladite aube (5),
le second, divergent et avec un axe sensiblement orthogonal par rapport à la direction du courant dudit vent (V) externe à ladite aube (5),
le troisième, des parois sensiblement parallèles et un axe incliné formant un angle aigu déterminé par rapport à l'axe orthogonal à la surface externe, avec une telle orientation que l'air sortant est dirigé dans le même sens du courant du vent (V) externe à ladite aube (5).

35. Système de conversion de l'énergie éolienne selon la revendication précédente, **caractérisé en ce que** lesdites secondes séries (12T) de trous (12) comprennent des trous (figure 4, 12) dudit troisième type (4c).

36. Système de conversion de l'énergie éolienne selon l'une quelconque des revendications précédentes, **caractérisé en ce qu'**il comprend au moins un dispositif de dissipation de courant pris d'une autre source de courant externe sur ledit système de conversion de l'énergie éolienne (1; 1'; 1" ; 1"') adapté pour augmenter le contenu d'enthalpie dudit fluide (F ; F' ; F"; F"') circulant à l'intérieur dudit agencement de dégivrage et d'anti-givrage.

37. Système de conversion de l'énergie éolienne selon l'une quelconque des revendications précédentes, **caractérisé en ce que** ladite nacelle (3) est associée de manière mobile à ladite tour (4) par l'interposition de septièmes moyens pour l'orientation de ladite nacelle (3) dans la direction de l'écoulement maximum de vent (V) présent à l'endroit où ledit système de conversion de l'énergie éolienne (1) est installé.

38. Procédé pour empêcher et supprimer le développement de glace sur les aubes de rotor d'un système de conversion de l'énergie éolienne d'un type comprenant :
une tour (4 ; 4') adaptée pour supporter et fixer ledit système de conversion de l'énergie éolienne (1 ; 1' ; 1" ; 1"') au sol ou sur une fondation,
une nacelle (3) agencée sur ladite tour (4 ; 4') à laquelle les premiers moyens (9, IN, 10 ; TR) pour transformer le mouvement de rotation d'un rotor afin de produire du courant électrique destiné à être envoyé dans un réseau électrique et pour la gestion et le fonctionnement d'éventuels dispositifs électriques dudit système de conversion de l'énergie éolienne (1) sont associés ;
un rotor (2) associé à ladite nacelle (3) de sorte qu'il peut tourner par rapport à ladite nacelle (3), ledit rotor (2) comprenant un nombre déterminé d'aubes (5) et étant susceptible d'être mis en mouvement par l'effet du vent (V) heurtant lesdites aubes (5), le procédé comprenant les étapes suivantes :
a) aspirer le fluide (F ; F' ; F" ; F"') ou l'air de l'environnement externe dudit système de conversion de l'énergie éolienne (1 ; 1' ; 1" ; 1"'),
b) envoyer ledit fluide aspiré (F ; F' ; F" ; F"') dans lesdits seconds moyens (2E, 19, 21) pour le passage dudit fluide (F ; F' ; F" ; F"') à l'intérieur des volumes (14, 15) définis à l'intérieur desdites aubes (5) dudit rotor (2),
c) réaliser l'éjection d'au moins une partie dudit fluide (F ; F' ; F" ; F"') à l'extérieur desdites aubes (5) en passant par des ouvertures (12) présentes sur au moins une partie d'une surface externe (5S) des aubes, lesdites ouvertures (12) étant en liaison de fluide avec lesdits volumes (14, 15) à l'intérieur desdites aubes (5),
**caractérisé en ce que** ladite éjection est réalisée afin de créer une couche ou film d'air sur les aubes (5) à l'extérieur d'une surface d'aube (5E) dotée desdites ouvertures (12) par interaction fluide-thermodynamique avec ledit vent (V) qui heurte au moins ladite surface d'aube (5E) dotée desdites ouvertures (12), et/ou avec de l'eau et de la glace éventuellement présentes sur ladite surface externe (5S) de ladite aube (5).

39. Procédé selon la revendication précédente, **caractérisé en ce qu'**entre les étapes du procédé a) et b), on prévoit un échange thermique entre ledit fluide (F ; F' ; F" ; F"') et les surfaces chauffées des premiers moyens (9, IN, 10 ; TR) dudit système de conversion de l'énergie éolienne (1 ; 1'; 1" ; 1"') pour transformer le mouvement rotatif d'un rotor (2) afin de générer du courant électrique, par un volume d'accumulation constitué à l'intérieur dudit système de conversion de l'énergie éolienne.
